# EUROPEAN PATENT APPLICATION

(11) **EP 4 850 926 A1**
(43) Date of publication of application: **09.12.2026**
(21) Application number: 25773665.2
(22) Date of filing: 10.03.2025
(51) Int. Cl.: B41M 3/00, B32B 7/023, B32B 33/00, B41M 1/14, B41M 1/18, B41M 1/22, G09F 9/30, G09F 13/04

(54) **PRINTED MATTER AND DISPLAY DEVICE**

(30) Priority: 22.03.2024 JP 2024047248; 17.12.2024 JP 2024221153
(71) Applicant: Toppan Holdings Inc., Tokyo 110-0016 (JP)
(72) Inventor: YASU, Yuki, Tokyo 110-0016 (JP); TAKAYANAGI, Aoi, Tokyo 110-0016 (JP); HASE, Yota, Tokyo 110-0016 (JP); FUNAKI, Hayato, Tokyo 110-0016 (JP)
(74) Representative: Wagner & Geyer
(86) International application number: PCT/JP2025/008874
(87) International publication number: WO 2025/197655

(57) **Abstract**

A printed object 2 includes a light transmissive base material 4, a design printing pattern 5 provided on a surface 4a of the light transmissive base material 4, and an adjustment pattern 30 having a topology that is an inverted pattern with respect to a color pattern constituting the design printing pattern 5. The color pattern is composed of a plurality of color dots of one or more colors, each of the plurality of color dots includes a color pattern binder and a plurality of pigment chips dispersed inside the binder, and each of the plurality of pigment chips is an interference pigment that generates interference light. In the printed object 2, the adjustment pattern 30 is formed of an ink having a low diffusion effect.

## Description

### Technical Field

The present invention relates to a printed object and a display device.

### Background Art

As a decorative sheet for a wall or the like, a printed object including a base material and a print pattern provided on a surface of the base material, the print pattern having a design such as a woodgrain pattern or an abstract pattern, is conventionally known. On a wall surface provided with the printed object, the design is always visually recognized. It is desired, on the other hand, that a design to be visually recognized change depending on whether or not a light source installed on a back surface side of the printed object is used.

For example, Patent Literature 1 discloses a printed object including a light source under a print pattern, in which, when the light source is turned off, a design based on reflected light of a print pattern composed of RGB interference pigments is visually recognized, and when the light source is turned on, on the other hand, a design based on transmitted light of a CMY print pattern is visually recognized (see FIG. 11 of Patent Literature 1). Patent Literature 2 discloses a decorative sheet having two designs using interference pigments, in which, when an image on a back surface side is not displayed, the designs are visually recognized, and when the image on the back surface side is displayed, the image is visually recognized (see FIGS. 1 and 2 of Patent Literature 2).

### Citation List

### Patent Literature

[Patent Literature 1] Japanese Patent No. 5725581
[Patent Literature 2] Japanese Patent No. 6839319

### Summary of Invention

### Technical Problem

The printed object described in Patent Literature 1 is provided with a transmittance adjustment layer having a topology that is an inverted pattern of the print pattern. The transmittance adjustment layer is composed of an ink having a diffusion effect in order to average the overall transmittance of light passing through the entire area of the base film. However, according to studies conducted by the present inventors, it has been found that when an ink having a diffusion effect is used as the transmittance adjustment layer, when the light source installed on the back surface side of the printed object is turned off, the design of the print pattern becomes cloudy white due to reflection when external illumination is turned on, and the design quality decreases.

An object of the present invention is to provide a printed object and a display device capable of preventing a design of a design printing pattern from becoming cloudy white and improving design quality.

### Solution to Problem

[1] The present invention relates, in one aspect, to a printed object. The printed object includes a light transmissive base material, a design printing pattern provided on a surface of the light transmissive base material, and an adjustment pattern having a topology that is an inverted pattern with respect to a color pattern constituting the design printing pattern. The color pattern is composed of a plurality of color dots of one or more colors, each of the plurality of color dots includes a color pattern binder and a plurality of pigment chips dispersed inside the binder, and each of the plurality of pigment chips is an interference pigment that generates interference light. In the printed object, the adjustment pattern is formed of an ink having a low diffusion effect.
   The printed object is provided with an adjustment pattern having a topology that is an inverted pattern with respect to the color pattern of the design printing pattern. In this case, the adjustment pattern can suppress the occurrence of a contrast difference between the design and the void portions when light is irradiated from the light source on the back surface side of the printed object (when the light source is turned on). This makes it possible to suppress visual recognition of the design for reflected light, which is preferably not visible when light is irradiated from the light source on the back surface side of the printed object. In addition, in the printed object, such an adjustment pattern is formed of an ink having a low diffusion effect. In this case, when the light source installed on the back surface side of the printed object is turned off, diffusion of light in the adjustment pattern due to reflected light from external illumination and the like is suppressed, and it is possible to prevent the design of the print pattern from becoming cloudy white. As a result, according to the printed object, the design quality of the design can be improved.
[2] In the printed object according to [1] above, it is preferable that the reflective haze value of the ink constituting the adjustment pattern be 10% or less. In this case, when the light source installed on the back surface side of the printed object is turned off, it is possible to reliably prevent the design of the print pattern from becoming cloudy white. Note that it is more preferable that the reflective haze value of the ink constituting the adjustment pattern be 5% or less.
[3] In the printed object according to [1] or [2] above, it is preferable that the adjustment pattern be formed of an ink that adjusts color by subtractive color mixing. In this case, a suitable adjustment pattern can be formed using general-purpose inks such as so-called CMY inks or CMYK inks.
[4] In the printed object according to any one of [1] to [3] above, the adjustment pattern may be configured such that the transmittance spectrum shape of the adjustment pattern in a visible light region corresponds to the transmittance spectrum shape of the color pattern in the visible light region. In this case, the contrast difference in the printed object can be reduced regardless of the spectrum of the light source used in the printed object or the type of display device that is an example of the light source (for example, an RGB spectrum light source). This makes it possible to more reliably suppress visual recognition of the design for reflected light, which is preferably not visible when light is irradiated from the light source on the back surface side of the printed object.
[5] In the printed object according to any one of [1] to [4] above, the adjustment pattern may have a reflectance of light in the visible light region of 5% or less. In this case, when the light source on the back surface side of the printed object is turned off, it is possible to prevent the adjustment pattern from inhibiting dark expression in the printed object.
[6] The printed object according to any one of [1] to [5] above may further include a transmissive smoke print pattern provided on a side opposite to the light transmissive base material with respect to the design printing pattern. In this case, the color vibrancy of the color pattern constituting the design printing pattern can be further improved. In addition, since the transmissive smoke print pattern has transparency, when the printed object is incorporated into a display device, a decrease in visibility of an image on the display device can be suppressed.
[7] The printed object according to any one of [1] to [6] above preferably further includes a solid layer provided between the design printing pattern and the adjustment pattern. In this case, since the adjustment pattern is formed on the solid layer, the formation position of the adjustment pattern with respect to the design printing pattern can be made highly accurate. This makes it possible to place the design printing pattern and the adjustment pattern in a more suitable positional relationship, and to reliably suppress the occurrence of a contrast difference between the design and the void portions. Note that the solid layer referred to herein is preferably a transmissive smoke layer.
[8] In the printed object according to any one of [1] to [7] above, the design printing pattern may have a first color pattern composed of a plurality of first color dots, and a second color pattern provided so as to at least partially overlap the first color pattern and composed of a plurality of second color dots. Each of the plurality of first color dots may include a first color binder and a plurality of first color pigment chips dispersed inside the first color binder, and each of the plurality of second color dots may include a second color binder and a plurality of second color pigment chips dispersed inside the second color binder. One of the plurality of first color pigment chips and the plurality of second color pigment chips may be first interference pigments of a plurality of colors that respectively generate mutually different first interference lights, and the other of the plurality of first color pigment chips and the plurality of second color pigment chips may be a second interference pigment that generates second interference light of a single color different from the color mixture exhibited by the plurality of colors of first interference pigments, and the first interference light and the second interference light may be additively mixed. In the printed object, since one of the first color pattern and the second color pattern includes interference pigments of a plurality of colors that generate mutually different interference lights, it is possible to achieve a design expression with a three-dimensional effect even with a small number of print patterns. Furthermore, in the printed object, since the pattern including interference pigments that generate a plurality of interference lights may be any one of the first color pattern and the second color pattern, the color adjustment operation and the registration operation at the time of printing can be simplified. Therefore, according to the printed object, a design with a three-dimensional effect can be expressed even with a small number of print patterns, and the color adjustment operation and the registration operation at the time of printing can be simplified.
[9] In the printed object according to [8] above, at least one of the first interference pigments and the second interference pigment may include interference pigments of a small particle size grade including a particle size range of 5 µm to 25 µm and interference pigments of a large particle size grade including a particle size range of 25 µm to 40 µm. When the particle size of the interference pigments included in the design printing pattern is small, the color vibrancy is weak, but even if the printed object is placed in front of a black screen, the design can be prevented from appearing dark. On the other hand, when the particle size of the interference pigments included in the design printing pattern is large, the transparency of the printed object increases, but the color vibrancy of the design can be made excellent. In the printed object, by configuring the interference pigments to include interference pigments of a small particle size grade and interference pigments of a large particle size grade, and arranging the interference pigments of the small particle size grade so as to fill the gaps between the interference pigments of the large particle size grade, it is possible to prevent the design from appearing dark and to obtain a printed object with excellent color vibrancy of the design. That is, according to the printed object having the above configuration, it is possible to provide a design with excellent visibility and color vibrancy. Furthermore, in the printed object, by including interference pigments of a large particle size grade, a decrease in the transparency of the design printing pattern can be suppressed. Therefore, according to the printed object, when the power is turned on, a decrease in the visibility of an image on the display device can be favorably suppressed.
[10] In the printed object according to [8] above, at least one of the first interference pigments and the second interference pigment may include interference pigments of a small particle size grade including a particle size range of 5 µm to 25 µm and interference pigments of a large particle size grade including a particle size range of 25 µm to 60 µm. In this case, similarly to the printed object according to [9] above, the color vibrancy of the design can be further improved. In addition, an unnecessary decrease in the transparency of the design printing pattern can be suppressed, and when a display device is used, the visibility of an image on the display device can be improved.
[11] In the printed object according to any one of [1] to [7] above, the design printing pattern may have a first color pattern composed of a plurality of first color dots, and a second color pattern provided so as to at least partially overlap the first color pattern and composed of a plurality of second color dots. Each of the plurality of first color dots may include a first color binder and a plurality of first color pigment chips dispersed inside the first color binder, and each of the plurality of second color dots may include a second color binder and a plurality of second color pigment chips dispersed inside the second color binder. One of the plurality of first color pigment chips and the plurality of second color pigment chips may be first interference pigments of a plurality of colors that respectively generate mutually different first interference lights, and the other of the plurality of first color pigment chips and the plurality of second color pigment chips may be a second interference pigment that generates second interference light of a single color that is the same color as any of the plurality of colors of first interference pigments, and the first interference light and the second interference light may be additively mixed. In the printed object, since one of the first color pattern and the second color pattern includes interference pigments of a plurality of colors that generate mutually different interference lights, it is possible to achieve a design expression with a three-dimensional effect even with a small number of print patterns. Furthermore, in the printed object, since the pattern including interference pigments that generate a plurality of interference lights may be any one of the first color pattern and the second color pattern, the color adjustment operation and the registration operation at the time of printing can be simplified. On the other hand, the other of the first color pattern and the second color pattern includes a second interference pigment that generates second interference light of a single color that is the same color as any of the plurality of first interference pigments. For example, with respect to a design that can be expressed with a small number of colors, the design can be expressed by adjusting the intensity of a single color by limiting the second interference pigment to the single color that is the same color as any of the first interference pigments. In addition, when it is desired to emphasize a certain hue, it is easier to adjust the hue using both the first color pattern and the second color pattern than using only one color pattern. In addition, when interference pigments are excessively added to one color pattern, the strength of the coating film decreases, but by using two color patterns, the decrease in strength can be suppressed. As described above, according to the printed object, the color adjustment operation and the registration operation at the time of printing can be simplified.
[12] In the printed object according to any one of [1] to [7] above, the design printing pattern may have a first color pattern composed of a plurality of first color dots, and a second color pattern provided so as to at least partially overlap the first color pattern and composed of a plurality of second color dots. Each of the plurality of first color dots may include a first color binder and a plurality of first color pigment chips dispersed inside the first color binder, and each of the plurality of second color dots may include a second color binder and a plurality of second color pigment chips dispersed inside the second color binder. The plurality of first color pigment chips may be a first interference pigment that generates first interference light of a single color, the plurality of second color pigment chips may be a second interference pigment that generates second interference light of a single color different from the color exhibited by the first interference pigment, and the first interference light and the second interference light may be additively mixed. In the printed object, the first color pattern includes a first interference pigment that generates first interference light of a single color, and the second color pattern includes a second interference pigment that generates second interference light of a single color different from the color exhibited by the first interference pigment. For example, with respect to a design that can be expressed with a small number of colors, the design can be expressed only by adjusting the intensity of single colors by limiting the interference pigments included in the first color pattern and the second color pattern to single colors. Therefore, according to the printed object, the color adjustment operation and the registration operation at the time of printing can be simplified.
[13] The present invention relates, in another aspect, to a display device. The display device includes the printed object according to any one of [1] to [12] above, and a light source. With the display device, when the light source is not turned on, the design of the design printing pattern is visually recognized, and when the light source is turned on, transmitted light from the light source (pattern display, image display, etc.) is visually recognized.
[14] In the display device according to [13] above, the light source may be a display device. With the display device, when the display is not turned on, the design of the design printing pattern is visually recognized, and when the display is turned on, transmitted light from the display (pattern display, image display, etc.) is visually recognized.

### Advantageous Effects of Invention

According to the present invention, it is possible to provide a printed object and a display device in which the design of the design printing pattern is prevented from becoming cloudy white and design quality is improved.

### Brief Description of Drawings

[FIG. 1] FIG. 1 is a cross-sectional view schematically illustrating a display device according to one embodiment.
[FIG. 2] FIG. 2 is a plan view schematically illustrating a printed object included in the display device illustrated in FIG. 1.
[FIG. 3] FIG. 3 is a cross-sectional view schematically illustrating color dots included in the printed object illustrated in FIG. 2.
[FIG. 4] FIG. 4 is a cross-sectional view schematically illustrating adjustment dots included in the printed object illustrated in FIG. 2.
[FIG. 5] FIG. 5 is a cross-sectional view schematically illustrating the relationship between color dots and adjustment dots.
[FIG. 6] FIG. 6 is a diagram illustrating an example of the relationship between the transmittance spectrum of the design printing pattern (color pattern) and the transmittance spectrum of the adjustment pattern in the visible light region.
[FIG. 7] (a) to (c) of FIG. 7 are cross-sectional views illustrating modified examples of the printed object.
[FIG. 8] FIG. 8 is a diagram illustrating a test apparatus for a display device including a printed object.
[FIG. 9] FIG. 9 (a) shows a reflected image acquired by the test apparatus illustrated in FIG. 8, and FIG. 9 (b) shows a transmitted image acquired by the test apparatus illustrated in FIG. 8.
[FIG. 10] (a) to (g) of FIG. 10 show test results of reflected images of Experimental Examples A to G.
[FIG. 11] (a) to (g) of FIG. 11 show test results of transmitted images of Experimental Examples A to G.
[FIG. 12] FIG. 12 is a diagram for explaining a contrast evaluation method in quantitative analysis of design pattern residue.
[FIG. 13] FIG. 13 is a graph showing the relationship between monitor luminance and contrast threshold.
[FIG. 14] (a) to (g) of FIG. 14 show reflected images acquired in the tests shown in (a) to (g) of FIG. 10 with regions equal to or above the threshold colored.
[FIG. 15] FIG. 15 is a graph showing the relationship between monitor luminance and contrast threshold, with the maximum contrast values of Experimental Examples A to G plotted thereon.
[FIG. 16] (a) to (d) of FIG. 16 are reflected images of additional Experimental Examples J to M.
[FIG. 17] (a) to (d) of FIG. 17 are transmitted images of additional Experimental Examples J to M.
[FIG. 18] FIG. 18 is a graph showing the relationship between monitor luminance and contrast threshold, with the maximum contrast values of additional Experimental Examples J to M plotted thereon.
[FIG. 19] FIG. 19 is a cross-sectional view illustrating a first modified example of the design printing pattern in the printed object.
[FIG. 20] FIG. 20 is a cross-sectional view illustrating a second modified example of the design printing pattern in the printed object.
[FIG. 21] FIG. 21 is a cross-sectional view illustrating a third modified example of the design printing pattern in the printed object.
[FIG. 22] FIG. 22 is a cross-sectional view illustrating a fourth modified example of the design printing pattern in the printed object.

### Description of Embodiments

Specific examples of a display device according to embodiments of the present invention will be described hereinafter with reference to the drawings. Note that the present invention is not limited to these examples but is indicated by the claims, and is intended to include all modifications within a meaning and a scope equivalent to the claims. In the following description, the same elements will be given the same reference numerals in the description of the drawings, and redundant description thereof is omitted.

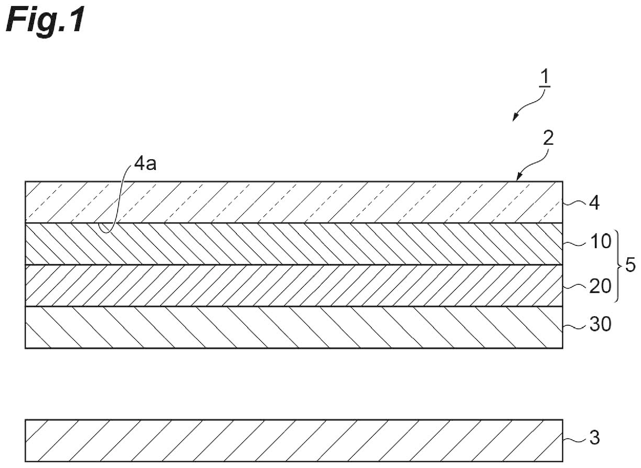

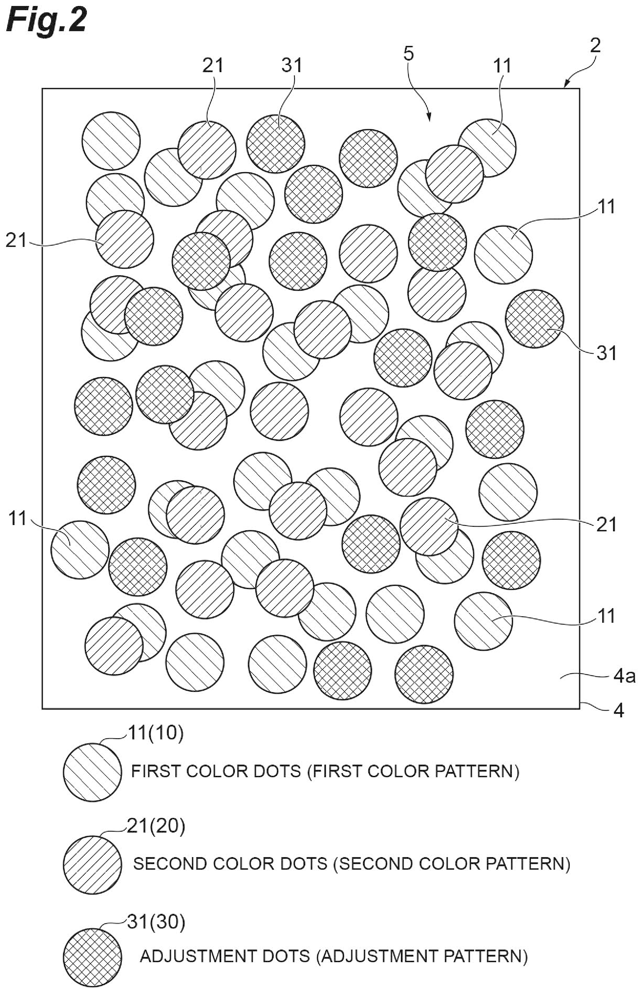

FIG. 1 is a cross-sectional view schematically illustrating a display device according to one embodiment. FIG. 2 is a plan view schematically illustrating a printed object included in the display device illustrated in FIG. 1. As illustrated in FIG. 1, the display device 1 includes a printed object 2 and a light source 3. The printed object 2 is a design sheet for expressing a design, and the display device 1 and the printed object 2 are used, for example, at a wall surface or a ceiling surface of a room. The printed object 2 may also be used in other portions. Examples of the design of the printed object 2 include a woodgrain pattern and a stone grain pattern. The printed object 2 includes a light transmissive base material 4, a design printing pattern 5, and an adjustment pattern 30. The printed object 2 is provided in front of the light source 3 (between a viewer and the light source 3). The printed object 2 has total light transmittance. For this reason, when the power of the light source 3 is turned on, the viewer can visually recognize light from the light source 3 passing through the printed object 2, and when the power of the light source 3 is turned off, the viewer can visually recognize the design expressed by the printed object 2. The light source 3 is, for example, a display device.

The light transmissive base material 4 is a substrate having visible light transmittance. The light transmissive base material 4 is made of, for example, a resin having transparency. Examples of the resin having transparency include PET, PMMA, polyethylene, polypropylene, and nylon. The light transmissive base material 4 may be a glass substrate. Thickness of the light transmissive base material 4 is, for example, 25 µm to 250 µm. In the case of a glass substrate, the thickness is, for example, about several mm to 10 mm. Note that, if necessary, a surface protective layer may be provided on a front surface side of the light transmissive base material 4 (a side opposite to the design printing pattern 5).

The design printing pattern 5 is a print pattern that expresses the design of the printed object 2. As illustrated in FIGS. 1 and 2, the design printing pattern 5 includes a first color pattern 10 provided on a surface 4a of the light transmissive base material 4, and a second color pattern 20 provided so as to at least partially overlap the first color pattern 10. The first color pattern 10 and the second color pattern 20 are shown in a layer form in FIG. 1 for schematic illustration, but as illustrated in FIG. 2, they are formed by a large number of dots. Specifically, the first color pattern 10 is formed by printing a plurality of first color dots 11, and the second color pattern 20 is formed by printing a plurality of second color dots 21. Note that the second color dots 21 may be directly printed on the surface 4a of the light transmissive base material 4 at locations where the first color dots 11 are not printed.

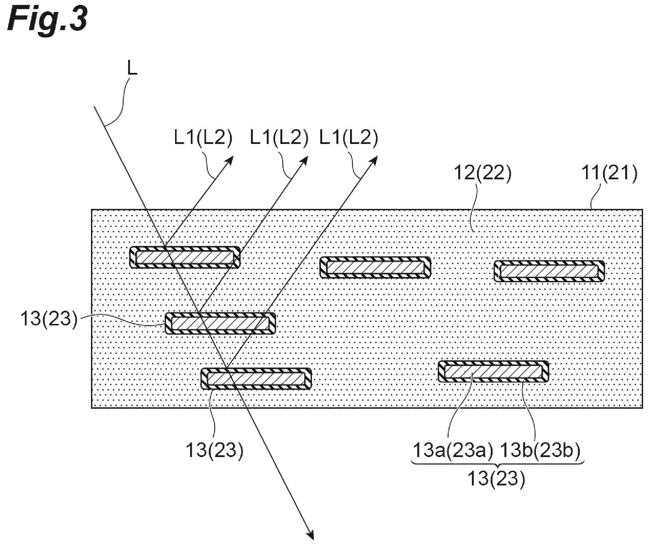

The first color pattern 10 can be provided on the surface 4a of the light transmissive base material 4 using, for example, screen printing, inkjet printing, gravure printing, or offset printing. As illustrated in FIG. 2, the first color pattern 10 is composed of a plurality of first color dots 11. Here, the "dots" mean spots that are elements constituting a printed image, and a shape thereof is not limited to a circle, and may be a rectangle, a polygon, or another shape. The same applies to dots in other patterns. As illustrated in FIG. 3, each of the plurality of first color dots 11 includes a first color binder 12 (color pattern binder) and a plurality of first color pigment chips 13 dispersed inside the first color binder 12. A content ratio of the plurality of first color pigment chips 13 is, for example, in a range of 0.5 parts by weight to 20 parts by weight when the first color binder 12 is assumed to be 100 parts by weight.

Examples of the first color binder 12 include vinyl-based resins, acrylic-based resins, thermoplastic urethane-based resins, polyester-based resins, and polycarbonate-based resins. Thickness of the first color pattern 10 (first color dots 11) is, for example, 1 µm to 10 µm. Note that the first color pattern 10 may contain a curing agent. In this case, heat resistance of the first color pattern 10 and adhesion of the first color pattern 10 to the light transmissive base material 4 can be improved.

The plurality of first color pigment chips 13 are interference pigments that generate interference light of a single color of a predetermined color or a color mixture of a plurality of colors. Each of the first color pigment chips 13 is composed of a flake 13a having visible light transmittance and a metal oxide film 13b covering the flake 13a. Of incident light L incident on the first color pattern 10 from the light transmissive base material 4 side, light reflected from the surface of the metal oxide film 13b and light passing through the metal oxide film 13b and reflected from the surface of the flake 13a interfere with each other to generate interference light L1. By adjusting the film thickness of the metal oxide film 13b and the refractive index of the metal oxide film 13b, interference light L1 having a desired wavelength can be generated.

The interference pigment constituting the first color pigment chip 13 is, for example, titanium dioxide-coated mica. The particle size range of the titanium dioxide-coated mica includes, for example, a range of 25 µm or more and 60 µm or less. Note that, here, the "particle size" means the largest diameter of a particle cross section. The flake constituting the first color pigment chip 13 may be other than mica, and may be, for example, silica, alumina, glass, or a polysilicate. The metal oxide film constituting the first color pigment chip 13 may be other than titanium dioxide, and may be, for example, zirconium oxide, zinc oxide, iron oxide, or tin oxide.

When incident light L enters the first color pattern 10, first interference light L1 is generated from each of the interference pigments that are the first color pigment chips 13. The interference pigment thus exhibits the single color or the color mixture. Note that the interference pigment constituting the first color pigment chip 13 may be, for example, a red interference pigment (red pearl pigment), a gold interference pigment (gold pearl pigment), or a green interference pigment (green pearl pigment).

The second color pattern 20 can be provided on the first color pattern 10 using, for example, screen printing, inkjet printing, gravure printing, or offset printing, similarly to the first color pattern 10. As illustrated in FIG. 2, the second color pattern 20 is composed of a plurality of second color dots 21. Each of the plurality of second color dots 21 includes a second color binder 22 and a plurality of second color pigment chips 23 dispersed inside the second color binder 22 (see FIG. 3). A content ratio of the plurality of second color pigment chips 23 is, for example, in a range of 0.5 parts by weight to 20 parts by weight when the second color binder 22 is assumed to be 100 parts by weight.

Examples of the second color binder 22 include vinyl-based resins, acrylic-based resins, thermoplastic urethane-based resins, polyester-based resins, and polycarbonate-based resins. Thickness of the second color pattern 20 (second color dots 21) is, for example, 1 µm to 10 µm. Note that the second color pattern 20 may contain a curing agent. In this case, heat resistance of the second color pattern 20 and adhesion of the second color pattern 20 to the first color pattern 10 and the light transmissive base material 4 can be improved.

The plurality of second color pigment chips 23 are interference pigments that generate interference light of a single color of a predetermined color or a color mixture of a plurality of colors. Each of the second color pigment chips 23 is composed of a flake 23a having visible light transmittance and a metal oxide film 23b covering the flake 23a, similarly to the first color pigment chip 13. Of incident light L incident on the second color pattern 20 from the light transmissive base material 4 side, light reflected from the surface of the metal oxide film 23b and light passing through the metal oxide film 23b and reflected from the surface of the flake 23a interfere with each other to generate interference light L2. By adjusting the film thickness of the metal oxide film 23b and the refractive index of the metal oxide film 23b, interference light L2 having a desired wavelength can be generated.

The interference pigment constituting the second color pigment chip 23 is, for example, titanium dioxide-coated mica. The particle size range of the titanium dioxide-coated mica includes, for example, a range of 25 µm or more and 60 µm or less. The flake constituting the second color pigment chip 23 may be other than mica, and may be, for example, silica, alumina, glass, or a polysilicate. The metal oxide film constituting the second color pigment chip 23 may be other than titanium dioxide, and may be, for example, zirconium oxide, zinc oxide, iron oxide, or tin oxide.

When incident light L enters the second color pattern 20, second interference light L2 is generated from each of the interference pigments that are the second color pigment chips 23. The interference pigment thus exhibits the single color or the color mixture. Note that the interference pigment constituting the second color pigment chip 23 may be, for example, a red interference pigment (red pearl pigment), a gold interference pigment (gold pearl pigment), or a green interference pigment (green pearl pigment).

In the printed object 2, a design is expressed by additively mixing the first interference light L1 generated by the first color pigment chips 13 and the second interference light L2 generated by the second color pigment chips 23.

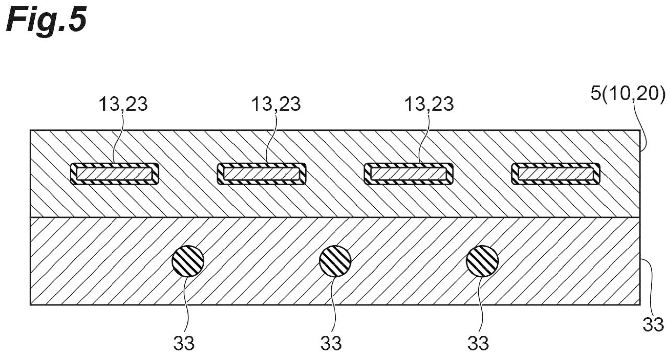

As illustrated in FIGS. 1 and 2, the adjustment pattern 30 is provided on the design printing pattern 5. The adjustment pattern 30 is a pattern having a topology that is an inverted pattern with respect to the color pattern constituting the design printing pattern 5. The adjustment pattern 30 is a pattern having a topology that is an inverted pattern with respect to any of the first color pattern 10, the second color pattern 20, or a color pattern that is a combination of the first color pattern 10 and the second color pattern 20, which constitute the design printing pattern 5. By having such a topology that is an inverted pattern, the adjustment pattern 30 suppresses the occurrence of a contrast difference between the design (the portion where the pigment chips 13 and 23 are present) and the void portions (the portions where the pigment chips 13 and 23 are not present) when light is irradiated from the light source 3 on the back surface side of the printed object 2 (when the light source is turned on) (see FIG. 5). Note that the adjustment pattern 30 is shown in a layer form in FIG. 1, but as illustrated in FIG. 2, it is formed by a large number of dots.

The adjustment pattern 30 is provided, for example, in the void portions that are not the design (the portions where the pigment chips 13 and 23 are present), but need not cover all of the void portions. The adjustment pattern 30 may be formed so as to occupy, for example, 50% or more of the area of the void portions, may be formed so as to occupy 60% or more of the area, and may be formed so as to occupy 70% or more of the area. On the other hand, if the occurrence of a contrast difference between the design and the void portions can be suppressed when light is irradiated from the light source on the back surface side of the printed object 2 (when the light source is turned on), the adjustment pattern 30 may be formed so as to occupy, for example, less than 50% of the area of the void portions, may be formed so as to occupy 40% or less of the area, and may be formed so as to occupy 30% or less of the area. In addition, the adjustment pattern 30 may be formed so as to partially overlap the design (the portions where the pigment chips 13 and 23 are present), and some positional deviation of the adjustment pattern 30 is acceptable.

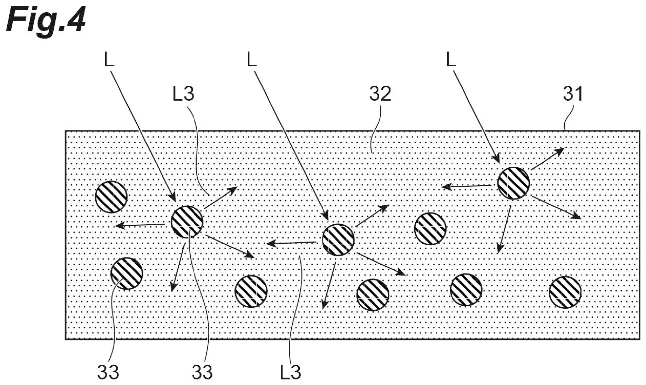

The adjustment pattern 30 can be provided on the first color pattern 10 and the second color pattern 20 using, for example, screen printing, inkjet printing, gravure printing, or offset printing, similarly to the first color pattern 10 and the second color pattern 20. The adjustment pattern 30 is composed of a plurality of color dots 31 (adjustment dots). Each of the plurality of color dots 31 includes an adjustment binder 32 and a plurality of adjustment pigments 33 dispersed inside the adjustment binder 32 (see FIG. 4). As the ink for forming the color dots 31, an ink that adjusts color by subtractive color mixing can be used, and for example, a general-purpose color ink such as CMY ink/CMYK ink (process color ink) can be used. In such a subtractive color mixing ink, as illustrated in FIG. 4, when light L enters the color dots 31, absorption and scattering L3 of light occur in the adjustment pigments 33.

Examples of the adjustment binder 32 include vinyl-based resins, acrylic-based resins, thermoplastic urethane-based resins, polyester-based resins, and polycarbonate-based resins. Thickness of the adjustment pattern 30 (color dots 31) is, for example, 1 µm to 10 µm. Note that the adjustment pattern 30 may contain a curing agent. In this case, heat resistance of the adjustment pattern 30 and adhesion of the adjustment pattern 30 to the design printing pattern 5 and the like (patterns printed before the adjustment pattern 30) can be improved.

As the adjustment pigments 33 (colorants) contained in the ink, for example, any conventionally known pigments (colorants) used in printing inks such as various screen inks, inkjet inks, gravure inks, and offset inks can be used. Note that the color ink may be used as a single color or as a spot color obtained by mixing two or more colors.

Such an adjustment pattern 30 is, in more detail, formed with a color ink that has been adjusted so as to form a pattern having reflectance and transmittance adjusted so as to have a topology that is an inverted pattern of the planar pattern (such as the first color pattern 10) constituting the design printing pattern 5. For example, in the adjustment pattern 30, as illustrated in FIGS. 2 and 5, the adjustment pigments 33 are arranged in a region that is the inverse of the pigment chips 13 and 23 of the design printing pattern 5 (the first color pattern 10 and the second color pattern 20). Note that, as an example of the color ink forming the adjustment pattern 30, an ink using a urethane-based resin binder and obtained by mixing respective color inks of a CMY ink/CMYK ink can be used. In this ink, the ratio of CMY can be, for example, C24M28Y30, and the ink can be obtained by mixing with a medium ink to adjust the density. Only K ink may be used, or a mixture of K ink and Y ink and the like may be used.

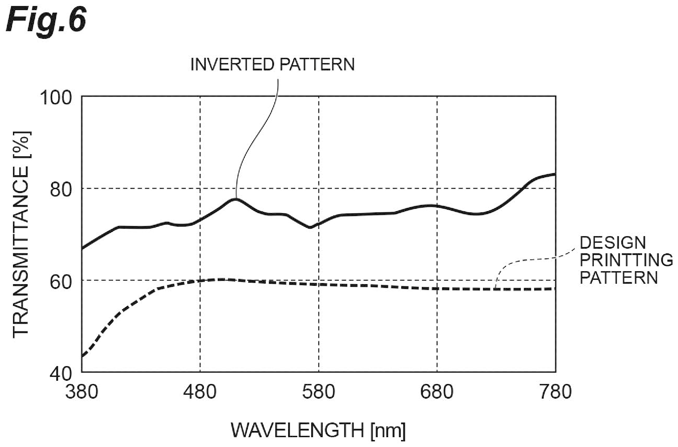

As illustrated in FIG. 6, the adjustment pattern 30 is adjusted and formed so as to have a transmittance spectrum shape that approximates (corresponds to) the transmittance spectrum shape of the design printing pattern 5 using interference pigments in the visible light region (between wavelength 380 nm and wavelength 780 nm). In this adjustment, the ratio of pigment inks (CMY inks, etc.) and the density (concentration) of printing are adjusted so that the contrast difference between the design printing pattern 5 and the adjustment pattern 30 disappears. Here, when the transmittance spectrum shape of the design printing pattern 5 and the transmittance spectrum shape of the adjustment pattern 30 approximate each other, the value of ΔE2000, which is the color difference between the two, is adjusted to be close to 0.2 (for example, a value such as 0.207).

In addition, the adjustment pattern 30 is formed of an ink having a low diffusion effect with respect to reflection when external illumination is turned on. When an ink having a high diffusion effect is used, when illumination light is turned on, the reflection may cause the portion of the design pattern that requires "blackness" (the design shown by the design printing pattern 5) to become cloudy white, and the design quality may decrease. Therefore, in the printed object 2 according to the present embodiment, each color dot 31 of the adjustment pattern 30 is formed (printed) using an ink in which the reflective haze value of the ink constituting the adjustment pattern 30 is 10% or less. The reflective haze value is preferably 5% or less, and more preferably 3% or less. By reducing the reflective haze value of the ink used, the blackness in the design can be maintained. The "reflective haze value" referred to herein can be measured using, for example, an Appearance Analyzer Rhopoint IQ-S (trade name, manufactured by Konica Minolta Japan, Inc.). During measurement, a measurement sample may be placed on a black PET sheet and measured using the above measurement device.

Note that the adjustment pattern 30 is also adjusted so that the reflectance of light in the visible light region is 5% or less. This prevents the blackness in the design from being inhibited by the adjustment pattern 30. In addition, the ink used for the adjustment pattern 30 is a non-transparent ink. As the ink used for the adjustment pattern 30, for example, various printing inks containing any conventionally known pigments (colorants) can be used. As the pigments (colorants), for example, various colorants and extender pigments can be used. Examples of colorants include azo pigments, disazo pigments, bisazo pigments, phthalocyanine pigments, anthraquinone-based pigments, isoindolinone pigments, dioxazine pigments, quinacridone pigments, perylene-based pigments, carbon black pigments, lake black pigments, perylene black pigments, aniline black pigments, iron oxide pigments, titanium pigments, and zinc sulfide pigments. Examples of extender pigments include (fine particle) silica, talc, calcium carbonate, magnesium carbonate, bentonite, precipitated barium sulfate, zinc oxide, and alumina. In addition, these colorants and extender pigments can be used alone or in combination of two or more.

The total light transmittance of the printed object 2 having such a configuration is, for example, 30% to 70%. The total light transmittance referred to herein means a value obtained by measuring total light transmittance using a spectrophotometer (for example, spectrophotometer UV-2100 manufactured by Shimadzu Corporation).

### [Modified Examples of Printed Object]

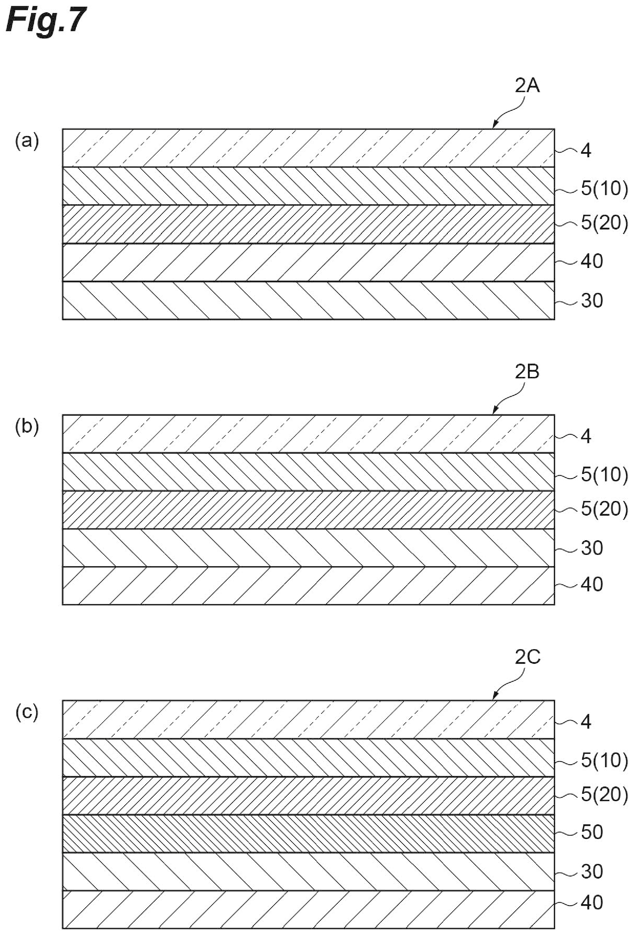

Here, modified examples of the printed object 2 will be described with reference to (a) to (c) of FIG. 7. Note that the printed objects 2A to 2C according to these modified examples are also used in combination with the light source 3, similarly to FIG. 1.

As illustrated in FIG. 7 (a), a printed object 2A according to a modified example further includes a transmissive smoke printed layer 40 (transmissive smoke print pattern) in addition to the light transmissive base material 4, the design printing pattern 5 (first color pattern 10, second color pattern 20), and the adjustment pattern 30. The transmissive smoke printed layer 40 is, for example, a solid print, and is disposed between the design printing pattern 5 and the adjustment pattern 30. The transmissive smoke printed layer 40 has a function of attenuating light from the front side of the viewpoint passing through the printed object 2. The transmissive smoke printed layer 40 is provided on a side opposite to the light transmissive base material 4 with respect to the design printing pattern 5. The transmissive smoke printed layer 40 can be provided on the second color pattern 20 using, for example, screen printing, inkjet printing, gravure printing, or offset printing using an ink in which a small amount of carbon black is dispersed in a vinyl-based, acrylic-based, urethane-based, or polyester-based resin binder. Thickness of the transmissive smoke printed layer 40 is, for example, 1 µm to 10 µm.

As illustrated in FIG. 7 (b), a printed object 2B according to another modified example further includes the transmissive smoke printed layer 40, similarly to the printed object 2A, in addition to the light transmissive base material 4, the design printing pattern 5 (first color pattern 10, second color pattern 20), and the adjustment pattern 30. However, in the printed object 2B, the transmissive smoke printed layer 40 is provided on the adjustment pattern 30.

As illustrated in FIG. 7(c), a printed object 2C according to yet another modified example further includes a white pattern 50 in addition to the printed object 2B. The white pattern 50 can be provided on the transmissive smoke printed layer 40 using, for example, screen printing, inkjet printing, gravure printing, or offset printing. The white pattern 50 is composed of a plurality of silver dots. Each of the plurality of silver dots includes a silver binder and a plurality of silver pigment chips dispersed inside the silver binder. A content ratio of the plurality of silver pigment chips is, for example, in a range of 0.5 parts by weight to 20 parts by weight when the silver binder is assumed to be 100 parts by weight. Examples of the silver binder include vinyl-based resins, acrylic-based resins, thermoplastic urethane-based resins, polyester-based resins, and polycarbonate-based resins. Thickness of the white pattern 50 is, for example, 1 µm to 10 µm. The white pattern 50 is provided, for example, between the second color pattern 20 and the adjustment pattern 30.

As described above, the printed object 2 and the display device 1 according to the present embodiment are provided with the adjustment pattern 30 having a topology that is an inverted pattern with respect to the color pattern of the design printing pattern 5. In this case, when light is irradiated from the light source 3 on the back surface side of the printed object 2, the adjustment pattern 30 can suppress the occurrence of a contrast difference between the design and the void portions. This makes it possible to suppress visual recognition of the design of the design printing pattern 5, which is preferably not visible when light is irradiated from the light source 3 on the back surface side of the printed object 2. In addition, in the printed object 2 and the display device 1, such an adjustment pattern 30 is formed of an ink having a low diffusion effect with respect to reflection. In this case, when the light source 3 installed on the back surface side of the printed object 2 is turned off, the design of the design printing pattern 5 does not become cloudy white due to reflection from external illumination and the like, and the design quality of the design can be improved.

In the printed object 2 and the display device 1 according to the present embodiment, the reflective haze value of the ink constituting the adjustment pattern 30 is 10% or less. This makes it possible to reliably prevent the design of the design printing pattern 5 from becoming cloudy white due to reflection from external illumination and the like when the light source 3 installed on the back surface side of the printed object 2 is turned off.

In the printed object 2 and the display device 1 according to the present embodiment, the adjustment pattern 30 is formed of an ink that adjusts color by subtractive color mixing. In this case, the adjustment pattern can be formed using general-purpose inks such as so-called CMY inks.

In the printed object 2 and the display device 1 according to the present embodiment, the adjustment pattern 30 may be configured such that the transmittance spectrum shape of the adjustment pattern in the visible light region corresponds to the transmittance spectrum shape of the design printing pattern 5 in the visible light region. In this case, the contrast difference in the printed object 2 can be reduced regardless of the spectrum of the light source 3 used in the printed object 2 or the type of display device that is an example of the light source 3 (for example, an RGB spectrum light source). This makes it possible to more reliably suppress visual recognition of the design, which is preferably not visible when light is irradiated from the light source 3 on the back surface side of the printed object 2.

In the printed object 2 and the display device 1 according to the present embodiment, the adjustment pattern 30 has a reflectance of light in the visible light region of 5% or less. In this case, when the light source 3 on the back surface side of the printed object 2 is turned off, it is possible to prevent the adjustment pattern 30 from inhibiting dark expression in the printed object 2.

The printed object 2 and the display device 1 according to the present embodiment may further include the transmissive smoke printed layer 40 provided on a side opposite to the light transmissive base material 4 with respect to the design printing pattern 5. In this case, the color vibrancy of the color pattern constituting the design printing pattern 5 can be further improved. In addition, since the transmissive smoke printed layer 40 has transparency, when the printed object 2 is incorporated into the display device 1, a decrease in visibility of an image on the display device 1 can be suppressed.

In the printed object 2 and the display device 1 according to the present embodiment, the transmissive smoke printed layer 40 provided between the design printing pattern 5 and the adjustment pattern 30 is a solid layer. In this case, since the adjustment pattern 30 is formed on the solid layer, the formation position of the adjustment pattern 30 with respect to the design printing pattern 5 can be made highly accurate. This makes it possible to place the design printing pattern 5 and the adjustment pattern 30 in a more suitable positional relationship, and to reliably suppress the occurrence of a contrast difference between the design and the void portions.

### [Experimental Examples]

Next, experimental examples of the printed object having the above-described configuration will be described. However, the present invention is not limited to these experimental examples.

The following were prepared as Experimental Examples A to G.

Experimental Example A was a printed object in which, in the configuration illustrated in FIG. 1, the transmissive smoke printed layer 40 was provided on the design printing pattern 5 instead of the adjustment pattern 30. That is, it was a printed object in which two colors of patterned pearl (the first color pattern 10 and the second color pattern 20) were sequentially formed on the light transmissive base material 4 by screen printing, and the transmissive smoke printed layer 40 as a solid layer was formed thereon by printing. The patterns in the other experimental examples were also prepared by screen printing in the same manner.

Experimental Examples B and C are examples according to the present invention. Experimental Example B was a printed object having the configuration illustrated in FIG. 7 (a), and Experimental Example C was a printed object having the configuration illustrated in FIG. 7 (b). That is, in Experimental Example B, two colors of patterned pearl (the first color pattern 10 and the second color pattern 20) were sequentially formed on the light transmissive base material 4 by printing, the transmissive smoke printed layer 40 as a solid layer was formed thereon, and the adjustment pattern 30 was provided thereon. In Experimental Example C, on the other hand, two colors of patterned pearl (the first color pattern 10 and the second color pattern 20) were sequentially formed on the light transmissive base material 4 by printing, the adjustment pattern 30 was formed directly thereon, and the transmissive smoke printed layer 40 as a solid layer was formed thereon. The formed adjustment pattern 30 was a print pattern having the topology of the inverted pattern of the design printing pattern 5. The adjustment pattern 30 was formed using CMY ink of subtractive color mixing. The ink used here had a CMY ratio of C24M28Y30, and was obtained by mixing with a medium ink to adjust the density. Such an ink is an ink having a low diffusion effect with respect to reflection, and had a reflective haze value of 5% or less. In addition, the reflectance of light in the visible light region was 5% or less.

Experimental Examples D and E were printed objects corresponding to Experimental Examples B and C, respectively, except that the ink used to form the adjustment pattern 30 was different. The ink used in Experimental Examples D and E was silver pearl ink. In Experimental Examples D and E, silver pearl ink was used to form an adjustment pattern having a topology that is an inverted pattern with respect to the design printing pattern 5. In Experimental Examples D and E, silver pearl pigment was added and dispersed in the same binder as the design printing pattern 5 of Experimental Examples B and C. The content ratio of the added silver pearl pigment was 5 parts by weight of silver pearl pigment having a particle size of 5 to 25 µm when the binder was assumed to be 100 parts by weight.

Experimental Examples F and G were printed objects corresponding to Experimental Examples B and C, respectively, except that the ink used to form the adjustment pattern 30 was different. The ink used in Experimental Examples F and G was urethane bead-added ink. In Experimental Examples F and G, urethane bead-added ink was used to form an adjustment pattern having a topology that is an inverted pattern with respect to the design printing pattern 5. In Experimental Examples F and G, urethane beads were added and dispersed in the same binder as the design printing pattern 5 of Experimental Examples B and C. The content ratio of the added urethane beads was 5 parts by weight of urethane beads having a particle size of 4 to 7 µm when the binder was assumed to be 100 parts by weight.

The configurations of the patterns/layers of Experimental Examples A to G are summarized in Table 1 below.

**[Table 1]**

| Experimental Example | Printing Mode |
|---|---|
| A | Patterned pearl (2 colors) + smoke solid printing |
| B | Patterned pearl (2 colors) + smoke solid printing + inverted pattern (CMY ink) |
| C | Patterned pearl (2 colors) + inverted pattern (CMY ink) + smoke solid printing |
| D | Patterned pearl (2 colors) + smoke solid printing + inverted pattern (silver pearl ink) |
| E | Patterned pearl (2 colors) + inverted pattern (silver pearl ink) + smoke solid printing |
| F | Patterned pearl (2 colors) + smoke solid printing + inverted pattern (urethane bead-added ink) |
| G | Patterned pearl (2 colors) + inverted pattern (urethane bead-added ink) + smoke solid printing |

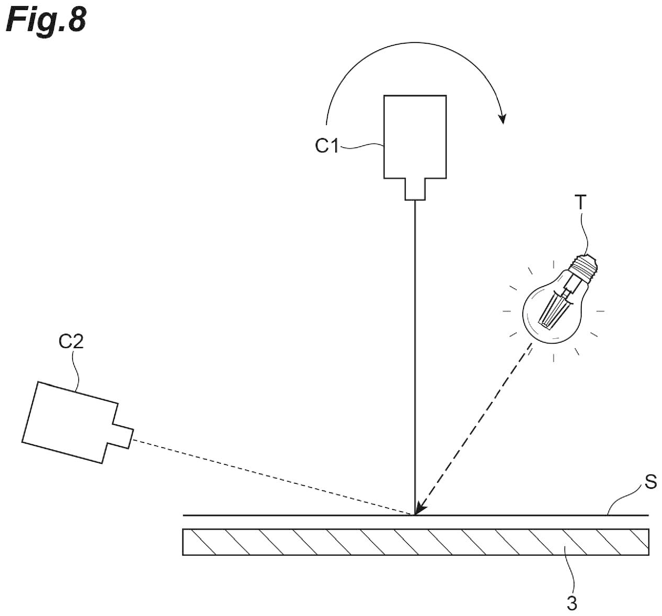

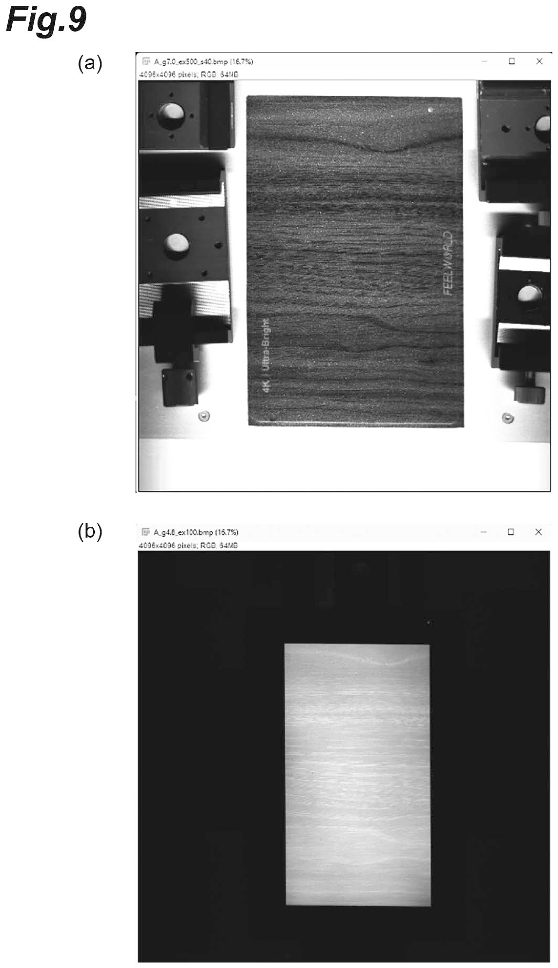

FIG. 8 is a device for detecting the state of the surface of such a sample, and includes a monitor as the light source 3, two cameras C1 and C2, and a light source T. The light source T was a white LED line light source. The irradiation angle of the light source T was 35 degrees with respect to a line perpendicular to the surface on which the sample S (printed object 2) was placed. The cameras C1 and C2 were color line cameras (7.04 µm × 4096 px), with a lens resolution of 58.8 µm/px and an acquired image size of 4096 px square. The camera C1 was placed on a line perpendicular to the surface on which the sample S was placed (front-facing shooting at 90 degrees). The camera C2 was placed at a wide-angle position of 75 degrees with respect to the perpendicular line (wide-angle shooting at 75 degrees). In this test apparatus, which is an image acquisition system, as illustrated in FIG. 9 (a), when the power of the monitor (light source 3) was turned off, a reflected image (the design of the design printing pattern 5) could be acquired (front-facing shooting). As illustrated in FIG. 9 (b), when the power of the monitor (light source 3) was turned on, a transmitted image (the image of the monitor transmitted through the design printing pattern 5) could be acquired (front-facing shooting).

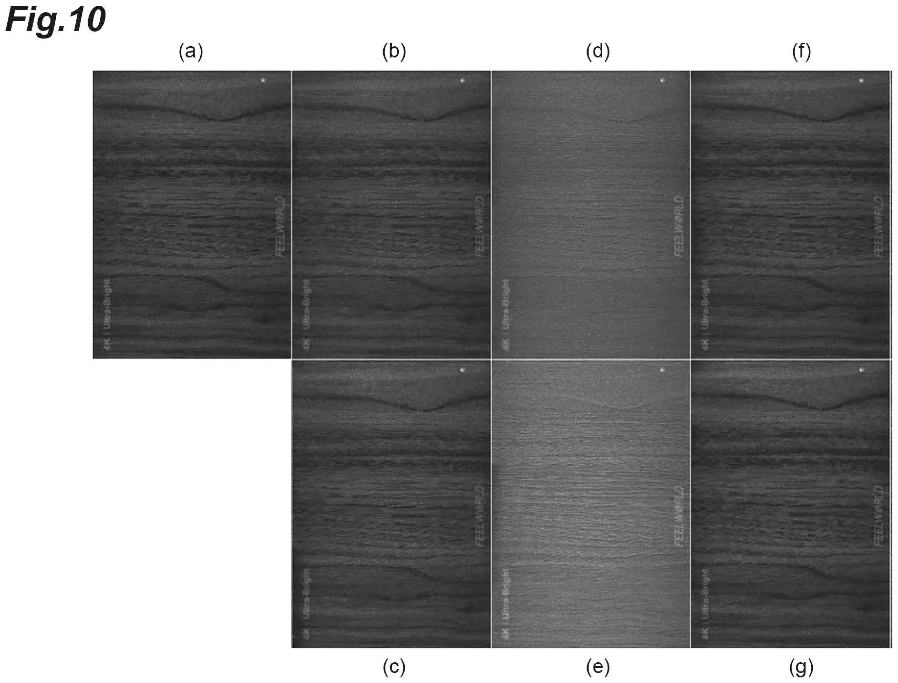

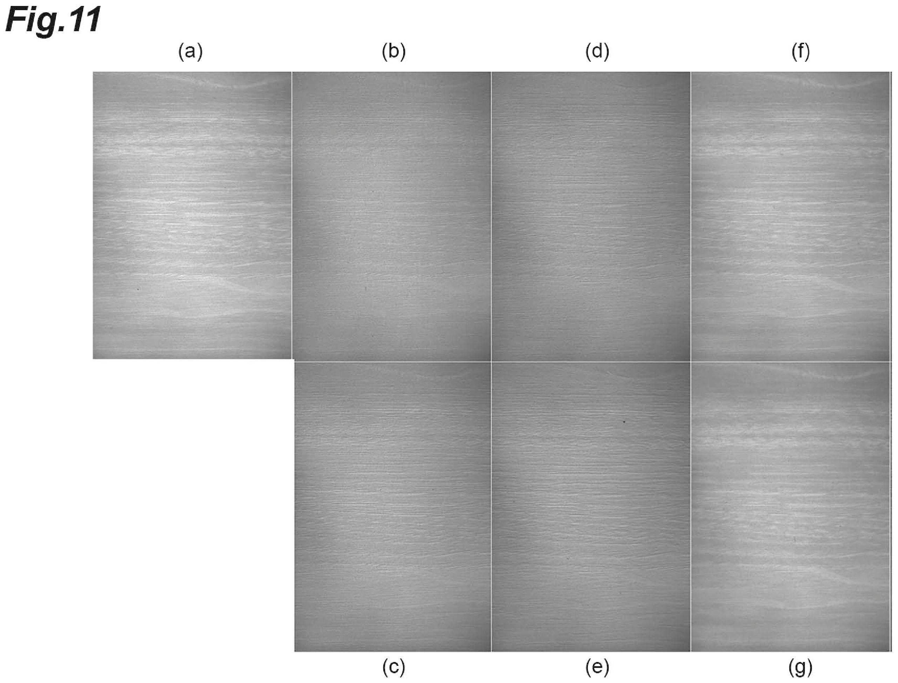

FIG. 10 (a) to (g) show the test results of reflected images corresponding to Experimental Examples A to G, respectively. FIG. 11 (a) to (g), on the other hand, show the test results of transmitted images corresponding to Experimental Examples A to G, respectively. FIG. 11 (a) to (g) correspond to FIG. 10 (a) to (g), respectively, and all images were taken by front-facing shooting. Wide-angle shooting showed the same tendency as front-facing shooting. As illustrated in FIG. 10, when the power of the light source 3 was turned off, Experimental Examples B and C (color ink, see FIG. 10 (b) and (c)) and Experimental Examples F and G (urethane bead ink, see FIG. 10 (f) and (g)) were able to achieve design quality comparable to Experimental Example A (see FIG. 10 (a)), which does not have an inverted pattern adjustment pattern. Experimental Examples D and E (silver ink, see FIG. 10 (d) and (e)), on the other hand, showed that the entire pattern became cloudy white, a change in color tone also occurred, and the design quality decreased.

As illustrated in FIG. 11, when the power of the light source 3 was turned on, compared to Experimental Example A (see FIG. 11 (a)) which does not have an adjustment pattern of an inverted pattern, Experimental Examples B and C (color ink, see FIG. 11 (b) and (c)) and Experimental Examples D and E (silver pearl ink, see FIG. 11 (d) and (e)) were confirmed to have the reflected image (the woodgrain pattern of the design printing pattern 5) suppressed and not conspicuous during display of the transmitted image. Experimental Examples F and G (urethane bead ink, see FIG. 11 (f) and (g)), on the other hand, were confirmed to have the reflected image conspicuous, similarly to Experimental Example A, resulting in the reflected image not being suppressed.

From the comparison of the reflected images and transmitted images of Experimental Examples A to G described above, it was confirmed that, as in Experimental Examples B and C, by providing the printed object with an adjustment pattern having a topology that is an inverted pattern with respect to the color pattern constituting the design printing pattern, and further forming the adjustment pattern with an ink having a low diffusion effect, it is possible to suppress cloudiness and improve the design quality of the design for reflected light, while suppressing visual recognition of the design for reflected light, which is preferably not visible when light is irradiated from the light source on the back surface side of the printed object. Note that in the case of Experimental Example B in FIG. 10 (b) and FIG. 11 (b), the display of the design for reflected light when light was irradiated from the light source was particularly suppressed. This is considered to be because, in Experimental Example B, since the inverted pattern was printed on the solid layer, the accuracy of the printing position of the inverted pattern with respect to the patterned pearl could be made high.

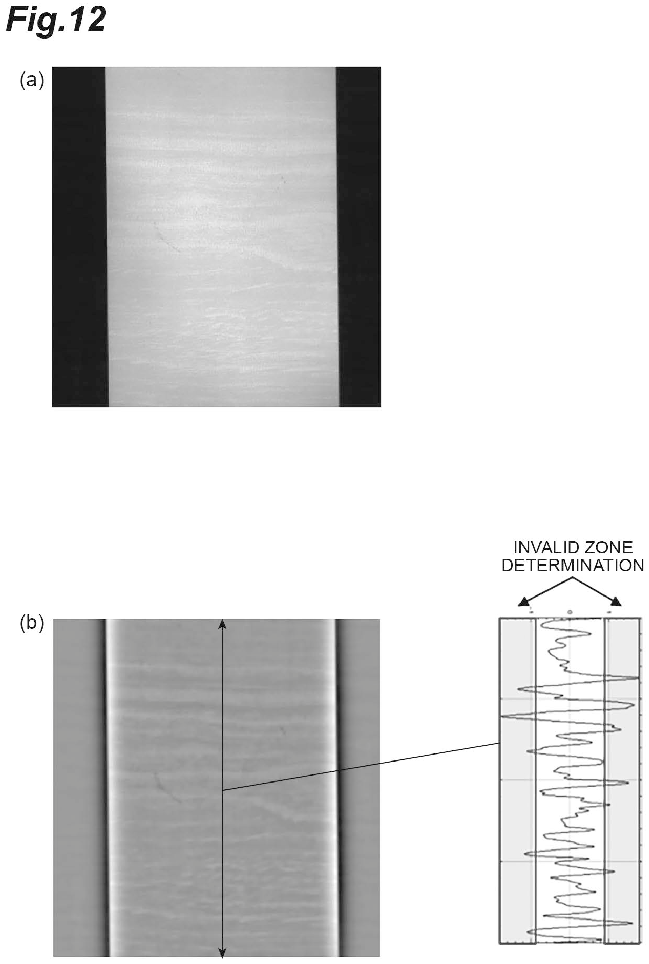

Here, the method of quantitative analysis of pattern residue will be described. In this analysis procedure, in order to evaluate the contrast of pattern residue, after capturing images as described above (see FIG. 12 (a)), each image was converted into luminance value data, and integration processing was performed by convolving a visual sensitivity filter that traces the spatial characteristics of vision. Then, a cross-sectional profile perpendicular to the design pattern was extracted from the image convolved with the visual sensitivity filter (see FIG. 12 (b)), and pattern visibility was determined based on a threshold value corresponding to the height (intensity) of the cross section. Portions higher than the threshold value were determined to be invalid zones.

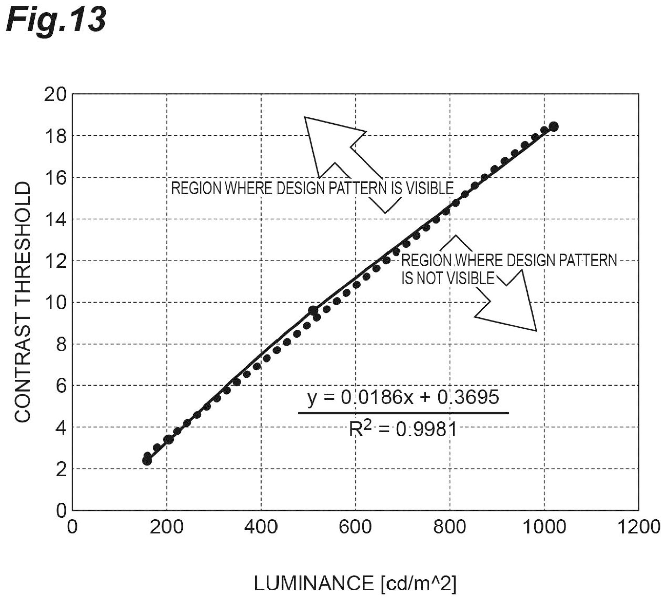

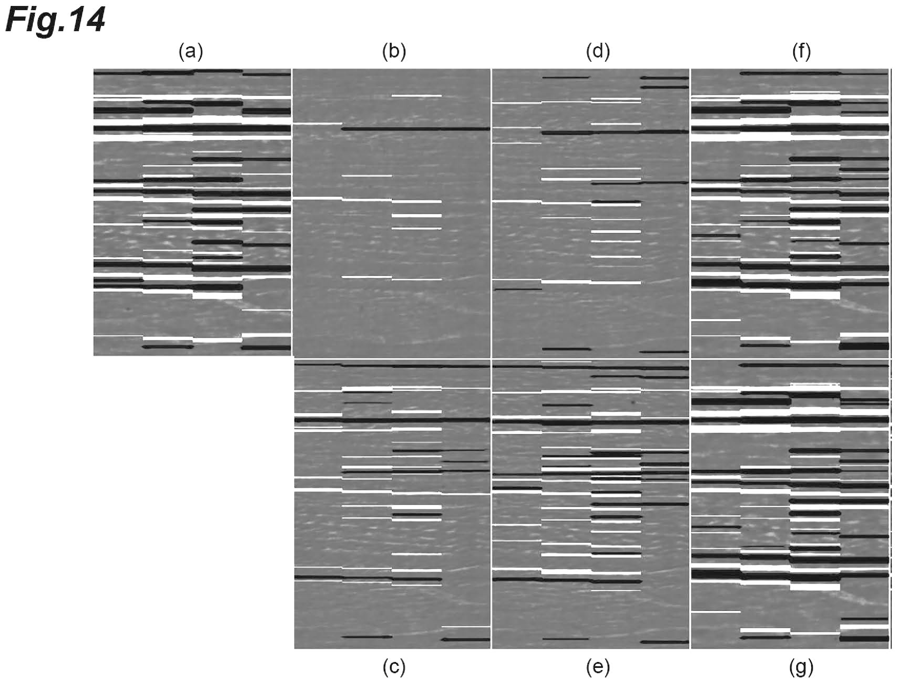

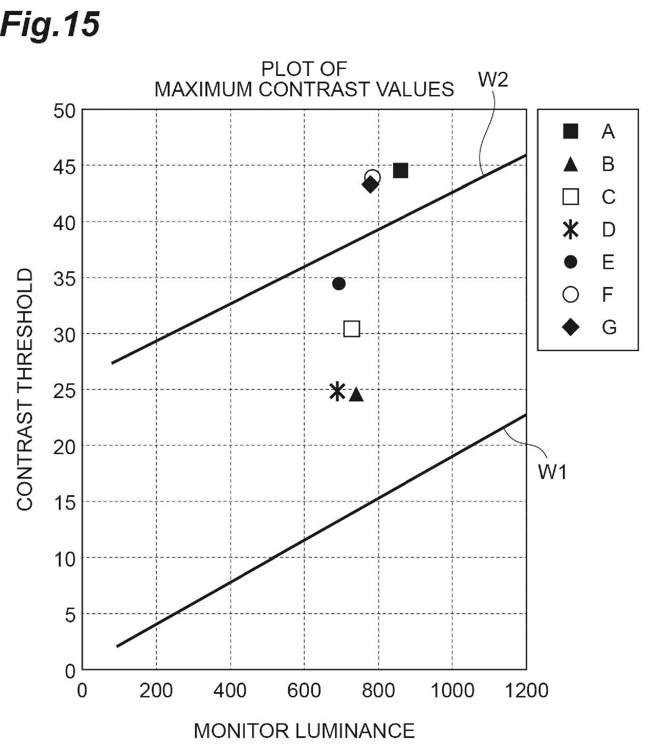

In addition, by changing the illumination intensity with respect to the luminance of the monitor, which is the light source in the display device having the configuration illustrated in FIG. 1, "images in which design residue is not visible" were acquired. The maximum contrast at that time was set as the threshold value. At this time, the luminance of the monitor was implemented at four levels. Then, the relationship between the monitor luminance and the visual recognition limit contrast threshold was formulated as shown in FIG. 13. If the value is below the formula shown in FIG. 13, it is a region where the design pattern is not visible, and if it is above this formula, it is a region where the design pattern is visible. However, since the design pattern is difficult to see even in the region where the design pattern is visible (below the threshold level formula W2 in FIG. 15), the region also includes a region where there is an improvement effect. FIG. 14 shows examples of transmitted analysis in images acquired from the front. The images shown in FIG. 14 (a) to (g) correspond to the images shown in FIG. 11 (a) to (g), respectively. As is also clear from FIG. 14, Experimental Examples B and C show that the design pattern residue during transmission is improved compared to Experimental Example A and the like.

FIG. 15 shows a graph showing the relationship between the luminance of the monitor as the light source 3 and the contrast threshold. This graph plots the values of the monitor luminance and contrast threshold in Experimental Examples A to G. All of Experimental Examples A to G are located above the contrast threshold formula W1, but in experimental examples close to this formula, the design pattern residue during transmission is improved. For example, if the threshold level that can be tolerated from a practical standpoint is formula W2, it can be said that the design pattern residue has been improved for those similar to Experimental Examples B, C, D, and E, which are below this formula.

### [Additional Experimental Examples]

Next, additional experimental examples of the printed object having the above-described configuration will be described. The present invention is not limited to these additional experimental examples either.

The following Experimental Examples J to M were prepared as additional experimental examples.

Experimental Example J is an example according to the present invention, and was a printed object having the configuration illustrated in FIG. 7 (b). That is, Experimental Example J was a printed object in which two colors of patterned pearl (the first color pattern 10 and the second color pattern 20) were sequentially formed on the light transmissive base material 4 by printing, the adjustment pattern 30 was formed thereon, and the transmissive smoke printed layer 40 as a solid layer was provided thereon. The design was a woodgrain pattern based on black and white. The formed adjustment pattern 30 was a print pattern having the topology of the inverted pattern of the design printing pattern 5. The adjustment pattern 30 was formed using K ink (black ink) and Y ink of subtractive color mixing. The ink used here was obtained by mixing with a medium ink to adjust the hue and density. Such an ink is an ink having a low diffusion effect with respect to reflection, and had a reflective haze value of 5% or less. In addition, the reflectance of light in the visible light region was 5% or less.

Experimental Example K was a comparative example, and was the printed object having the configuration illustrated in FIG. 1 with the adjustment pattern 30 removed. That is, Experimental Example K was a printed object in which two colors of patterned pearl (the first color pattern 10 and the second color pattern 20) were sequentially formed on the light transmissive base material 4 by printing, and the transmissive smoke printed layer 40 as a solid layer was formed thereon (formed with K ink). The design was a normal woodgrain pattern.

Experimental Example L is an example according to the present invention, and was a printed object having the configuration illustrated in FIG. 7 (b). That is, in Experimental Example L, two colors of patterned pearl (the first color pattern 10 and the second color pattern 20) were sequentially formed on the light transmissive base material 4 by printing, the adjustment pattern 30 was formed thereon, and the transmissive smoke printed layer 40 as a solid layer was provided thereon. The design was a stone grain pattern. The formed adjustment pattern 30 was a print pattern having the topology of the inverted pattern of the design printing pattern 5. The adjustment pattern 30 was formed using K ink (black ink) of subtractive color mixing. The K ink used here was obtained by mixing with a medium ink to adjust the density. Such an ink is an ink having a low diffusion effect with respect to reflection, and had a reflective haze value of 5% or less. In addition, the reflectance of light in the visible light region was 5% or less.

Experimental Example M is an example according to the present invention, and was a printed object having the configuration illustrated in FIG. 7 (a). That is, in Experimental Example M, two colors of patterned pearl (the first color pattern 10 and the second color pattern 20) were sequentially formed on the light transmissive base material 4 by printing, the transmissive smoke printed layer 40 as a solid layer was formed thereon, and the adjustment pattern 30 was provided thereon. The design was a normal woodgrain pattern. The formed adjustment pattern 30 was a print pattern having the topology of the inverted pattern of the design printing pattern 5. The adjustment pattern 30 was formed using CMY ink of subtractive color mixing. The ink used here had a CMY ratio of C24M28Y30, and was obtained by mixing with a medium ink to adjust the density. Such an ink is an ink having a low diffusion effect with respect to reflection, and had a reflective haze value of 5% or less. In addition, the reflectance of light in the visible light region was 5% or less.

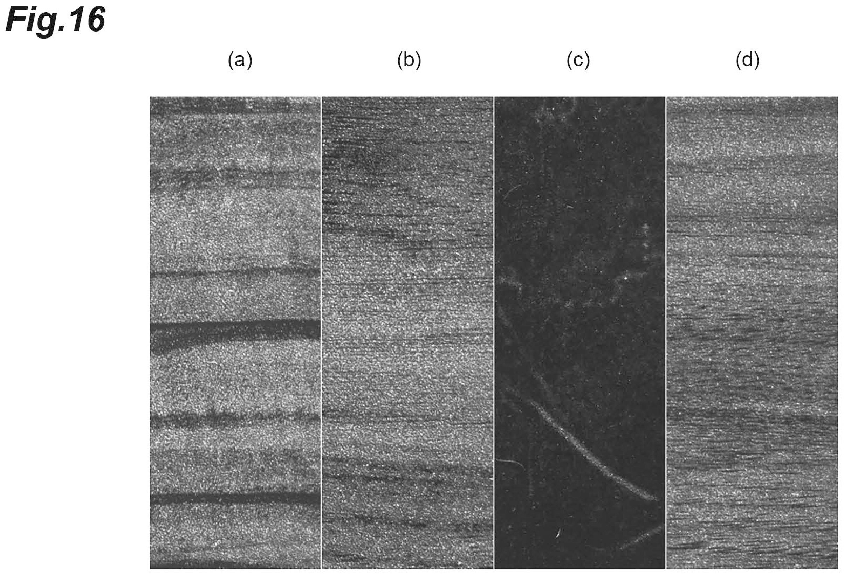

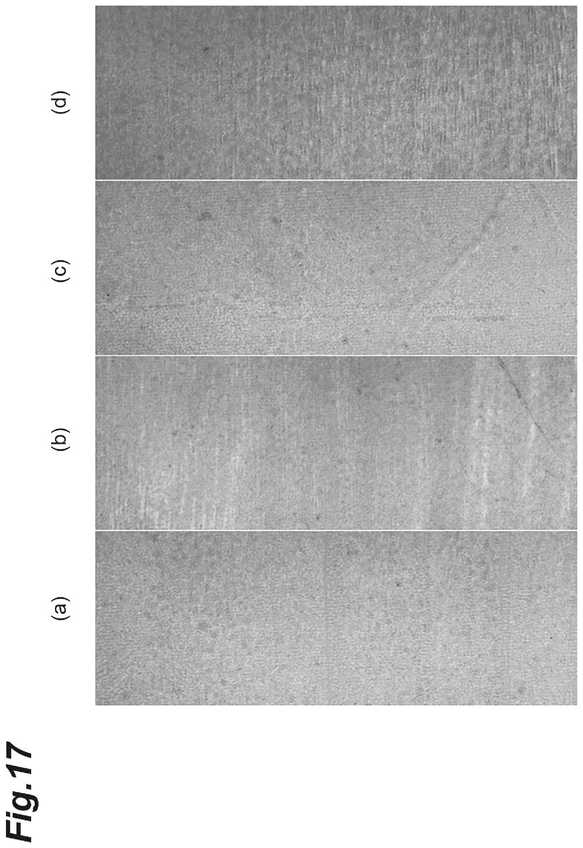

Note that FIG. 16 (a) to (d) show reflected images of additional Experimental Examples J to M. FIG. 17 (a) to (d) show transmitted images of additional Experimental Examples J to M.

Here, for additional Experimental Examples J to M, a method for determining whether or not the adjustment pattern 30 (inverted pattern) formed of an ink having a low diffusion effect is applied to the target printed object will be described by making determinations for Experimental Examples J to M. The method for determining the presence or absence of application of the inverted pattern can be implemented using, for example, some or all of the following methods. Note that in the following, the evaluator is a person different from the manufacturer of the printed object.
(1) Visual evaluation (possibility of use of inverted pattern)
(2) Optical microscope inspection (presence or absence of CMY/CMYK ink)
(3) Optical microscope inspection (determination of patterning)
(4) Line camera (determination by quantification of pattern residue)

Regarding the evaluation of (1) visual evaluation (possibility of use of inverted pattern), the printed objects of Experimental Examples J to M were observed by simple visual inspection, and the possibility of use of the inverted pattern was determined. At this time, observation was performed by transmitting light from below the printed object.

Regarding (2) optical microscope inspection (presence or absence of CMY/CMYK ink), an optical microscope (Digital Microscope VHX-800 (trade name), manufactured by Keyence Corporation) was used to visually observe the printed objects of Experimental Examples J to M at a magnification of 1000x, and the presence or absence of CMY ink/K ink was determined. At this time, observation was performed by transmitting light from below the printed object.

Regarding (3) optical microscope inspection (determination of patterning), the same optical microscope as in (2) above was used to perform tiling observation of the printed objects of Experimental Examples J to M at a magnification of 250x, and the presence or absence of patterning was determined. At this time, observation was performed by transmitting light from below the printed object.

Regarding (4) line camera (determination by quantification of pattern residue), quantitative analysis was performed on the printed objects of Experimental Examples J to M using the method described above such as in FIG. 12.

Table 2 below shows the results of the above evaluation methods (1) to (4) and the overall determination for Experimental Examples J to M.

**[Table 2]**

| Experimental Example | Visual Evaluation (Possibility of Use of Inverted Pattern) | Optical Microscope Inspection (Presence or Absence of CMY/CMYK Ink) | Optical Microscope Inspection (Determination of Patterning) | Line Camera (Determination by Quantification of Pattern Residue) | Overall Determination |
|---|---|---|---|---|---|
| J | Possible | K ink present | Patterning present | Contrast weak (21.57) | Inverted pattern used |
| K | No inverted pattern | K ink present | No patterning | Contrast strong (52.83) | Inverted pattern not used |
| L | Possible | K ink present | Patterning present | Contrast weak (18.10) | Inverted pattern used |
| M | Possible | CMY ink present | Patterning present | Contrast weak (23.05) | Inverted pattern used |

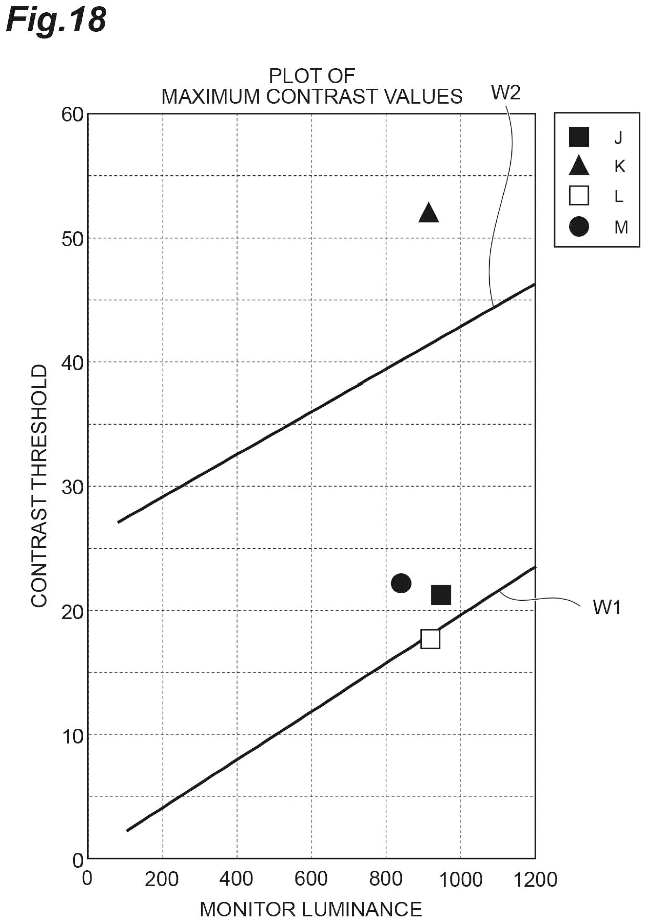

As is clear from the determination results shown in Table 2 above, it was confirmed that appropriate overall determination can be made by making determinations using evaluation methods (1) to (4). Note that in Experimental Example J, Y ink was also used as the adjustment pattern 30, but that point could not be determined by visual inspection in determination (2). It is considered that the cause was that Y ink is difficult to determine by visual inspection. However, since the presence or absence of K ink could be determined, and the fact that the contrast was weak (i.e., the inverted pattern was used) could be determined using determination method (4), it was confirmed that the presence or absence of use of the inverted pattern can be sufficiently determined even for such a configuration. In addition, FIG. 18 shows the contrast threshold values of additional Experimental Examples J to M plotted. It was confirmed that all of Experimental Examples J, L, and M, which are examples, are located near the contrast threshold formula W1.

### [Modified Examples of Print Pattern]

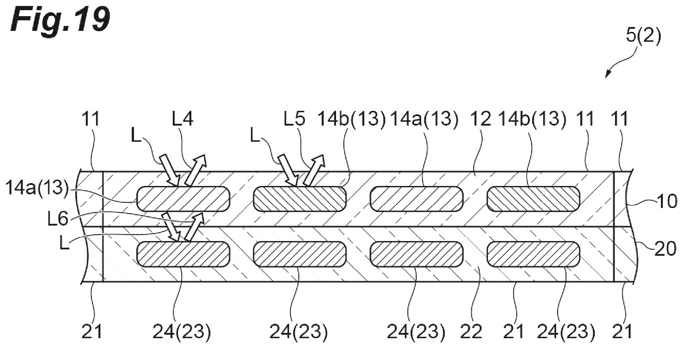

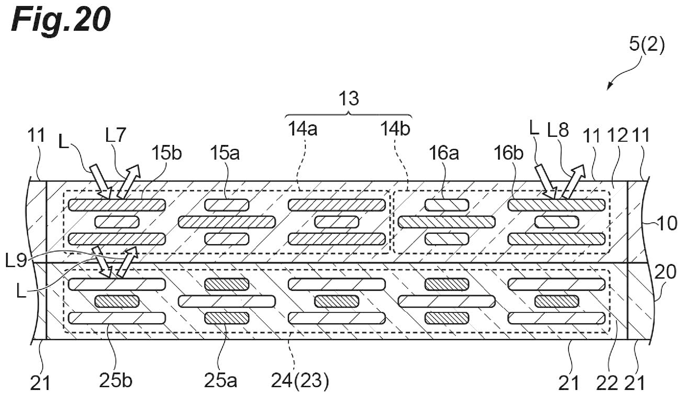

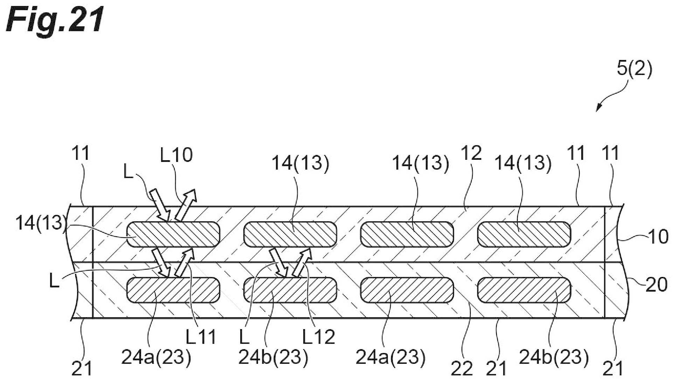

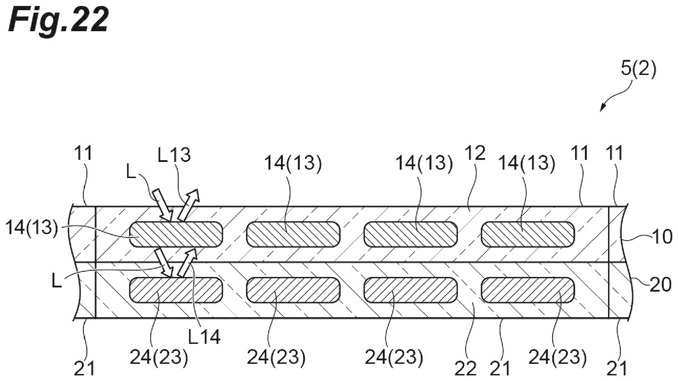

Here, modified examples of the color pattern constituting the design printing pattern 5 will be described with reference to FIGS. 19 to 22. FIG. 19 is a cross-sectional view illustrating a first modified example of the design printing pattern in the printed object. FIG. 20 is a cross-sectional view illustrating a second modified example of the design printing pattern in the printed object. FIG. 21 is a cross-sectional view illustrating a third modified example of the design printing pattern in the printed object. FIG. 22 is a cross-sectional view illustrating a fourth modified example of the design printing pattern in the printed object. In the following, differences from the above-described printed object 2 and design printing pattern 5 will be mainly described, and descriptions of common points may be omitted. Note that for configurations other than the design printing pattern 5, the respective configurations of the above-described printed objects 2, 2A to 2C can be applied as appropriate.

### [First Modified Example]

As illustrated in FIG. 19, the design printing pattern 5 of the printed object 2 according to the first modified example includes a first color pattern 10 composed of a plurality of first color dots 11, and a second color pattern 20 provided so as to at least partially overlap the first color pattern 10 and composed of a plurality of second color dots 21. Each of the plurality of first color dots 11 includes a first color binder 12 and a plurality of first color pigment chips 13 dispersed inside the first color binder 12.

In the first modified example, the plurality of first color pigment chips 13 are first interference pigments 14a and 14b of a plurality of colors that generate mutually different interference lights. Each of the first interference pigments 14a and 14b is composed of a flake having visible light transmittance and a metal oxide film covering the flake (see FIG. 3). When incident light L enters the first color pattern 10, beams of first interference lights L4 and L5 different from each other are respectively generated from the first interference pigments 14a and 14b. That is, in the first modified example, the wavelengths of the first interference lights L4 and L5 are different from each other. The first interference pigments 14a and 14b thus exhibit a color mixture. The first interference pigments 14a and 14b are, for example, a red interference pigment (red pearl pigment) and a gold interference pigment (gold pearl pigment), respectively. In this case, the first interference lights L4 and L5 exhibit red and gold, respectively. However, the colors of the pigments are not limited. The blending amounts of the first interference pigments 14a and 14b may be the same or different from each other.

In the first modified example, the plurality of second color pigment chips 23 are a second interference pigment 24 that generates interference light L6 of a single color different from the color mixture exhibited by the first interference pigments 14a and 14b. The second interference pigment 24 is composed of a flake having visible light transmittance and a metal oxide film covering the flake (see FIG. 3). When incident light L enters the second color pattern 20, second interference light L6 of a single color is generated from the second interference pigment 24. The second interference pigment 24 thus exhibits a single color. The second interference pigment 24 may be any interference pigment that generates second interference light L6 of a single color different from the color mixture exhibited by the first interference pigments 14a and 14b, and is, for example, a green interference pigment (green pearl pigment). In this case, the second interference light L6 exhibits green.

In the printed object 2 according to such a first modified example, a design is expressed by additively mixing the first interference lights L4 and L5 generated by the first interference pigments 14a and 14b and the second interference light L6 generated by the second interference pigment 24. Note that an aspect may also be employed in which the second color pattern 20 includes interference pigments of a plurality of colors that generate mutually different interference lights L4 and L5, and the first color pattern 10 includes an interference pigment that generates interference light L6 of a single color different from the color mixture.

In the printed object 2 according to such first modified example 1, since one of the first color pattern 10 and the second color pattern 20 includes interference pigments of a plurality of colors that generate mutually different interference lights L4 and L5, it is possible to achieve a design expression with a three-dimensional effect even with a small number of print patterns. Furthermore, in the printed object 2, since the pattern including interference pigments that generate a plurality of interference lights L4 and L5 may be any one of the first color pattern 10 and the second color pattern 20, the color adjustment operation and the registration operation at the time of printing can be simplified. Therefore, according to the printed object 2 according to the first modified example, a design with a three-dimensional effect can be expressed even with a small number of print patterns, and the color adjustment operation and the registration operation at the time of printing can be simplified.

### [Second Modified Example]

As illustrated in FIG. 20, the design printing pattern 5 of the printed object 2 according to the second modified example has a first color pattern 10 composed of a plurality of first color dots 11, and a second color pattern 20 provided so as to at least partially overlap the first color pattern 10 and composed of a plurality of second color dots 21. Each of the plurality of first color dots 11 includes a first color binder 12 and a plurality of first color pigment chips 13 dispersed inside the first color binder 12.

In the second modified example, the plurality of first color pigment chips 13 are first interference pigments 14a and 14b of a plurality of colors that generate mutually different interference lights L7 and L8. Each of the first interference pigments 14a and 14b is composed of a flake having visible light transmittance and a metal oxide film covering the flake (see FIG. 3). The first interference pigment 14a includes a plurality of first titanium dioxide-coated micas 15a of a small particle size grade including a particle size range of 5 µm to 25 µm, and second titanium dioxide-coated micas 15b of a large particle size grade including a particle size range of 25 µm to 40 µm. The first interference pigment 14b includes a plurality of first titanium dioxide-coated micas 16a of a small particle size grade including a particle size range of 5 µm to 25 µm, and a plurality of second titanium dioxide-coated micas 16b of a large particle size grade including a particle size range of 25 µm to 40 µm. An average particle size (D50) of the first titanium dioxide-coated micas 15a and 16a is, for example, about 15 µm, and an average particle size (D50) of the second titanium dioxide-coated micas 15b and 16b is, for example, about 25 µm. The average particle size of the first titanium dioxide-coated micas 15a and 16a is thus smaller than the average particle size of the second titanium dioxide-coated micas 15b and 16b. The second titanium dioxide-coated micas 15b and 16b may include a particle size range of 25 µm to 60 µm. In this case, the average particle size (D50) of the second titanium dioxide-coated micas 15b and 16b is, for example, about 35 µm. As illustrated in FIG. 20, each of the plurality of first titanium dioxide-coated micas 15a and 16a is disposed in such a way as to fill the gaps between the plurality of second titanium dioxide-coated micas 15b and 16b. Here, the "particle size" means the largest diameter of a particle cross section.

When incident light L enters the first color pattern 10, beams of first interference lights L7 and L8 different from each other are generated from the first interference pigments 14a and 14b, respectively. That is, the wavelengths of the first interference lights L7 and L8 are different from each other. The first interference pigments 14a and 14b thus exhibit a color mixture. The first interference pigments 14a and 14b may be, for example, a red interference pigment (red pearl pigment) and a gold interference pigment (gold pearl pigment), respectively. In this case, the first interference lights L7 and L8 exhibit red and gold, respectively. Each of the first interference pigments 14a and 14b may be an interference pigment of another color. The blending amounts of the first interference pigments 14a and 14b may be the same or different from each other.

In the second modified example, the plurality of second color pigment chips 23 are a second interference pigment 24 that generates interference light L9 of a single color different from the color mixture exhibited by the first interference pigments 14a and 14b. The second interference pigment 24 is composed of a flake having visible light transmittance and a metal oxide film covering the flake (see FIG. 3). Of incident light L incident on the second color pattern 20 from the light transmissive base material 4 side, light reflected from the surface of the metal oxide film and light passing through the metal oxide film and reflected from the surface of the flake interfere with each other to generate interference light L9. The second interference pigment 24 includes a plurality of first titanium dioxide-coated micas 25a of a small particle size grade including a particle size range of 5 µm to 25 µm, and second titanium dioxide-coated micas 25b of a large particle size grade including a particle size range of 25 µm to 40 µm. An average particle size (D50) of the first titanium dioxide-coated micas 25a is, for example, about 15 µm, and an average particle size (D50) of the second titanium dioxide-coated micas 25b is, for example, about 25 µm. The average particle size of the first titanium dioxide-coated micas 25a is thus smaller than the average particle size of the second titanium dioxide-coated micas 25b. The second titanium dioxide-coated micas 25b may include a particle size range of 25 µm to 60 µm. In this case, the average particle size (D50) of the second titanium dioxide-coated micas 25b is, for example, about 35 µm. Each of the plurality of first titanium dioxide-coated micas 25a is disposed in such a way as to fill the gaps between the plurality of second titanium dioxide-coated micas 25b.

When incident light L enters the second color pattern 20, second interference light L9 of a single color is generated from the second interference pigment 24. The second interference pigment 24 thus exhibits a single color. The second interference pigment 24 may be any interference pigment that generates second interference light L9 of a single color different from the color mixture exhibited by the first interference pigments 14a and 14b, and may be, for example, a green interference pigment (green pearl pigment). In this case, the second interference light L9 exhibits green. Note that the second interference pigment 24 may be an interference pigment of a color other than green.

In the printed object 2 according to such a second modified example, a design is expressed by additively mixing the first interference lights L7 and L8 generated by the first interference pigments 14a and 14b and the second interference light L9 generated by the second interference pigment 24. Note that an aspect may also be employed in which the second color pattern 20 includes interference pigments of a plurality of colors that generate mutually different interference lights L7 and L8, and the first color pattern 10 includes an interference pigment that generates interference light L9 of a single color different from the color mixture.

When the particle size of the interference pigments included in the design printing pattern 5 is small, the color vibrancy is weak, but even if the printed object is placed in front of a black screen, the design can be prevented from appearing dark. On the other hand, when the particle size of the interference pigments included in the design printing pattern 5 is large, the transparency of the printed object increases, but the color vibrancy of the design can be made excellent. In the printed object 2 according to the second modified example, by configuring the interference pigments to include interference pigments of a small particle size grade and interference pigments of a large particle size grade, and arranging the interference pigments of the small particle size grade so as to fill the gaps between the interference pigments of the large particle size grade, it is possible to prevent the design from appearing dark and to obtain a printed object with excellent color vibrancy of the design. That is, according to the printed object 2 having the above configuration, it is possible to provide a design with excellent visibility and color vibrancy. Furthermore, in the printed object 2 according to the second modified example, by including interference pigments of a large particle size grade, a decrease in the transparency of the design printing pattern 5 is suppressed. Therefore, according to the printed object, when the power is turned on, a decrease in the visibility of an image on the display device is favorably suppressed.

Note that in the printed object 2 according to the second modified example, at least one of the first interference pigments and the second interference pigment may include interference pigments of a small particle size grade including a particle size range of 5 µm to 25 µm and interference pigments of a large particle size grade including a particle size range of 25 µm to 60 µm. In this case, the color vibrancy of the design can be further improved. In addition, an unnecessary decrease in the transparency of the design printing pattern 5 can be suppressed, and when the display device 1 is used, the visibility of an image on the display device 1 can be improved.

### [Third Modified Example]

As illustrated in FIG. 21, the design printing pattern 5 of the printed object 2 according to the third modified example includes a first color pattern 10 composed of a plurality of first color dots 11, and a second color pattern 20 provided so as to at least partially overlap the first color pattern 10 and composed of a plurality of second color dots 21. Each of the plurality of first color dots 11 includes a first color binder 12 and a plurality of first color pigment chips 13 dispersed inside the first color binder 12.

In the third modified example, the plurality of first color pigment chips 13 are an interference pigment 14 that generates interference light of a single color of a predetermined color. The interference pigment 14 has the same color as any of the interference pigments 24a and 24b described later. The interference pigment 14 is composed of a flake having visible light transmittance and a metal oxide film covering the flake (see FIG. 3). When incident light L enters the first color pattern 10, interference light L10 of a single color is generated from the interference pigment 14. The interference pigment 14 thus exhibits a single color.

The second color pattern 20 is composed of a plurality of second color dots 21. Each of the plurality of second color dots 21 includes a second color binder 22 and a plurality of second color pigment chips 23 dispersed inside the second color binder 22. The plurality of second color pigment chips 23 are interference pigments 24a and 24b of a plurality of colors that generate mutually different interference lights L11 and L12. Each of the interference pigments 24a and 24b is composed of a flake having visible light transmittance and a metal oxide film covering the flake (see FIG. 3). When incident light L enters the second color pattern 20, beams of interference lights L11 and L12 different from each other are generated from the interference pigments 24a and 24b, respectively. That is, the wavelengths of the interference lights L11 and L12 are different from each other.

In the printed object 2 according to such a third modified example, a design is expressed by additively mixing the interference light L10 generated by the first interference pigment 14 and the interference lights L11 and L12 generated by the interference pigments 24a and 24b. Note that an aspect may also be employed in which the second color pattern 20 includes an interference pigment that generates interference light L10, and the first color pattern 10 includes interference pigments that generate interference lights L11 and L12.

In the printed object, since one of the first color pattern and the second color pattern includes interference pigments of a plurality of colors that generate mutually different interference lights L11 and L12, it is possible to achieve a design expression with a three-dimensional effect even with a small number of print patterns. Furthermore, in the printed object, since the pattern including interference pigments that generate a plurality of interference lights L11 and L12 may be any one of the first color pattern and the second color pattern, the color adjustment operation and the registration operation at the time of printing can be simplified. On the other hand, the other of the first color pattern and the second color pattern includes a second interference pigment that generates second interference light L10 of a single color that is the same color as any of the plurality of first interference pigments. For example, with respect to a design that can be expressed with a small number of colors, the design can be expressed by adjusting the intensity of a single color by limiting the second interference pigment to the single color that is the same color as any of the first interference pigments. When it is desired to emphasize a certain hue, it is easier to adjust the hue using both the first color pattern and the second color pattern than using only one color pattern. When interference pigments are excessively added to one color pattern, the strength of the coating film decreases, but by using two color patterns, the decrease in strength can be suppressed. As described above, the color adjustment operation and the registration operation at the time of printing can be simplified.

### [Fourth Modified Example]

As illustrated in FIG. 22, the design printing pattern 5 of the printed object 2 according to the fourth modified example includes a first color pattern 10 composed of a plurality of first color dots 11, and a second color pattern 20 provided so as to at least partially overlap the first color pattern 10 and composed of a plurality of second color dots 21. Each of the plurality of first color dots 11 includes a first color binder 12 and a plurality of first color pigment chips 13 dispersed inside the first color binder 12.

The plurality of first color pigment chips 13 are an interference pigment 14 that generates interference light L13 of a single color of a predetermined color. The interference pigment 14 is composed of a flake having visible light transmittance and a metal oxide film covering the flake (see FIG. 3). When incident light L enters the first color pattern 10, interference light L13 of a single color is generated from the interference pigment 14. The interference pigment 14 thus exhibits a single color.

The second color pattern 20 is composed of a plurality of second color dots 21. Each of the plurality of second color dots 21 includes a second color binder 22 and a plurality of second color pigment chips 23 dispersed inside the second color binder 22. The plurality of second color pigment chips 23 are an interference pigment 24 that generates interference light L14 of a single color different from the color exhibited by the interference pigment 14. The interference pigment 24 is composed of a flake having visible light transmittance and a metal oxide film covering the flake (see FIG. 3). When incident light L enters the second color pattern 20, interference light L14 of a single color is generated from the interference pigment 24. The interference pigment 24 thus exhibits a single color.

In the printed object 2 according to such a fourth modified example, a design is expressed by additively mixing the interference light L13 generated by the first interference pigment 14 and the second interference light L14 generated by the second interference pigment 24.

In the printed object, the first color pattern includes a first interference pigment that generates first interference light of a single color, and the second color pattern includes a second interference pigment that generates second interference light of a single color different from the color exhibited by the first interference pigment. For example, with respect to a design that can be expressed with a small number of colors, the design can be expressed only by adjusting the intensity of single colors by limiting the interference pigments included in the first color pattern and the second color pattern to single colors. Therefore, according to the printed object, the color adjustment operation and the registration operation at the time of printing can be simplified.

The display device and the printed object according to the present invention are not limited to the above-described embodiments, and various other modifications are possible. For example, in the above description, an example in which the design printing pattern 5 is composed of two patterns has been described, but the design printing pattern 5 need only include at least one pattern. In addition, the design printing pattern 5 may be configured by stacking three or more patterns.

### Reference Signs List

1: display device, 2, 2A, 2B, 2C: printed object, 3: light source (display device), 4: light transmissive base material, 5: design printing pattern, 10: first color pattern, 11: first color dot, 12: first color binder, 13: first color pigment chip, 14a, 14b: first interference pigment, 20: second color pattern, 21: second color dot, 22: second color binder, 23: second color pigment chip, 24: second interference pigment, 30: adjustment pattern, 40: transmissive smoke printed layer, L: incident light, L1 to L14: interference light.

## Claims

1. A printed object comprising:
a light transmissive base material;
a design printing pattern provided on a surface of the light transmissive base material; and
an adjustment pattern having a topology that is an inverted pattern with respect to a color pattern constituting the design printing pattern,
wherein the color pattern is composed of a plurality of color dots of one or more colors, each of the plurality of color dots includes a color pattern binder and a plurality of pigment chips dispersed inside the binder, each of the plurality of pigment chips is an interference pigment that generates interference light, and
wherein the adjustment pattern is formed of an ink having a low diffusion effect.

2. The printed object according to claim 1,
wherein a reflective haze value of the ink constituting the adjustment pattern is 10% or less.

3. The printed object according to claim 1 or 2,
wherein the adjustment pattern is formed of an ink that adjusts color by subtractive color mixing.

4. The printed object according to any one of claims 1 to 3,
wherein the adjustment pattern is configured such that a transmittance spectrum shape of the adjustment pattern in a visible light region corresponds to a transmittance spectrum shape of the color pattern in the visible light region.

5. The printed object according to any one of claims 1 to 4,
wherein the adjustment pattern has a reflectance of light in a visible light region of 5% or less.

6. The printed object according to any one of claims 1 to 5, further comprising a transmissive smoke print pattern provided on a side opposite to the light transmissive base material with respect to the design printing pattern.

7. The printed object according to any one of claims 1 to 6, further comprising a solid layer provided between the design printing pattern and the adjustment pattern.

8. The printed object according to any one of claims 1 to 7,
wherein the design printing pattern includes:
a first color pattern composed of a plurality of first color dots; and
a second color pattern provided so as to at least partially overlap the first color pattern and composed of a plurality of second color dots,
wherein each of the plurality of first color dots includes a first color binder and a plurality of first color pigment chips dispersed inside the first color binder,
wherein each of the plurality of second color dots includes a second color binder and a plurality of second color pigment chips dispersed inside the second color binder,
wherein one of the plurality of first color pigment chips and the plurality of second color pigment chips is first interference pigments of a plurality of colors that respectively generate mutually different first interference lights,
wherein the other of the plurality of first color pigment chips and the plurality of second color pigment chips is a second interference pigment that generates second interference light of a single color different from a color mixture exhibited by the plurality of colors of first interference pigments, and the first interference light and the second interference light are additively mixed.

9. The printed object according to claim 8,
wherein at least one of the first interference pigments and the second interference pigment includes interference pigments of a small particle size grade including a particle size range of 5 µm to 25 µm and interference pigments of a large particle size grade including a particle size range of 25 µm to 40 µm.

10. The printed object according to claim 8,
wherein at least one of the first interference pigments and the second interference pigment includes interference pigments of a small particle size grade including a particle size range of 5 µm to 25 µm and interference pigments of a large particle size grade including a particle size range of 25 µm to 60 µm.

11. The printed object according to any one of claims 1 to 7,
wherein the design printing pattern includes:
a first color pattern composed of a plurality of first color dots; and
a second color pattern provided so as to at least partially overlap the first color pattern and composed of a plurality of second color dots,
wherein each of the plurality of first color dots includes a first color binder and a plurality of first color pigment chips dispersed inside the first color binder,
wherein each of the plurality of second color dots includes a second color binder and a plurality of second color pigment chips dispersed inside the second color binder,
wherein one of the plurality of first color pigment chips and the plurality of second color pigment chips is first interference pigments of a plurality of colors that respectively generate mutually different first interference lights,
wherein the other of the plurality of first color pigment chips and the plurality of second color pigment chips is a second interference pigment that generates second interference light of a single color that is the same color as any of the plurality of colors of first interference pigments, and the first interference light and the second interference light are additively mixed.

12. The printed object according to any one of claims 1 to 7,
wherein the design printing pattern has:
a first color pattern composed of a plurality of first color dots; and
a second color pattern provided so as to at least partially overlap the first color pattern and composed of a plurality of second color dots,
wherein each of the plurality of first color dots includes a first color binder and a plurality of first color pigment chips dispersed inside the first color binder,
wherein each of the plurality of second color dots includes a second color binder and a plurality of second color pigment chips dispersed inside the second color binder,
wherein the plurality of first color pigment chips are first interference pigments that each generate first interference light of a single color,
wherein the plurality of second color pigment chips are second interference pigments that each generate second interference light of a single color different from the color exhibited by the first interference pigments, and
wherein the first interference light and the second interference light are additively mixed.

13. A display device comprising:
the printed object according to any one of claims 1 to 12; and
a light source.

14. The display device according to claim 13,
wherein the light source is a display device.
